# EUROPEAN PATENT APPLICATION

(11) **EP 4 142 112 A1**
(43) Date of publication of application: **01.03.2023**
(21) Application number: 20932353.4
(22) Date of filing: 20.04.2020
(51) Int. Cl.: H02K 1/27

(54) **ROTOR, MOTOR, COMPRESSOR, AND AIR-CONDITIONING DEVICE**

(71) Applicant: MITSUBISHI ELECTRIC CORPORATION, Chiyoda-ku Tokyo 100-8310 (JP)
(72) Inventor: NIGO, Masahiro, Tokyo 100-8310 (JP); HIROSAWA, Yuji, Tokyo 100-8310 (JP)
(74) Representative: Pfenning, Meinig & Partner mbB
(86) International application number: PCT/JP2020/017037
(87) International publication number: WO 2021/214825

(57) **Abstract**

A rotor includes a rotor core having an outer circumference extending in a circumferential direction about an axis, a magnet insertion hole located on an inner side of the outer circumference in a radial direction about the axis, and an opening connected to an end of the magnet insertion hole in the circumferential direction, and a permanent magnet disposed in the magnet insertion hole and having a magnetic pole surface on an outer side in the radial direction. The magnet insertion hole has an insertion hole outer end edge located on an outer side in the radial direction and an insertion hole inner end edge located on an inner side in the radial direction. The opening has an outer end edge extending from an end of the insertion hole outer end edge in the circumferential direction toward the outer circumference, and an inner end edge facing the outer end edge. The opening has a first portion where the outer end edge and the inner end edge face each other across a width W1, and a second portion where the outer end edge and the inner end edge face each other across a width W2 wider than the width W1. The second portion is located between the first portion and the permanent magnet. At least a part of the first portion is located on an outer side in the radial direction with respect to a reference line obtained by extending the magnetic pole surface in a plane perpendicular to the axis.

## Description

### TECHNICAL FIELD

The present disclosure relates to a rotor, a motor, a compressor, and an air conditioner.

### BACKGROUND ART

In a permanent magnet embedded rotor, a permanent magnet is disposed in a magnet insertion hole formed in a rotor core. Protrusions for positioning the permanent magnet are provided on both sides of the magnet insertion hole (see, for example, Patent Reference 1).

### PRIOR ART REFERENCE

### PATENT REFERENCE

Patent Reference 1: Japanese Patent Application Publication No. 2009-247131 (see FIG. 1)

### SUMMARY OF THE INVENTION

### PROBLEM TO BE SOLVED BY THE INVENTION

Meanwhile, when a large current flows through a stator coil, such as when a heavy load is applied to the motor, the permanent magnet may be demagnetized due to magnetic flux from a stator. If the above-described protrusions are provided, the magnetic flux from the stator is likely to flow to the permanent magnet through the protrusions, and thus the permanent magnet is likely to be demagnetized.

The present disclosure is intended to solve the above-described problem, and an object of the present disclosure is to suppress the demagnetization of a permanent magnet.

### MEANS OF SOLVING THE PROBLEM

A rotor of the present disclosure includes a rotor core having an outer circumference extending in a circumferential direction about an axis, a magnet insertion hole located on an inner side of the outer circumference in a radial direction about the axis, and an opening connected to an end of the magnet insertion hole in the circumferential direction, and a permanent magnet disposed in the magnet insertion hole and having a magnetic pole surface on an outer side in the radial direction. The magnet insertion hole has an insertion hole outer end edge located on an outer side in the radial direction and an insertion hole inner end edge located on an inner side in the radial direction. The opening has an outer end edge extending from an end of the insertion hole outer end edge in the circumferential direction toward the outer circumference, and an inner end edge facing the outer end edge. The opening has a first portion where the outer end edge and the inner end edge face each other across a width W1, and a second portion where the outer end edge and the inner end edge face each other across a width W2 wider than the width W1. The second portion is located between the first portion and the permanent magnet. At least a part of the first portion is located on an outer side in the radial direction with respect to a reference line obtained by extending the magnetic pole surface in a plane perpendicular to the axis.

### EFFECTS OF THE INVENTION

According to the present disclosure, a bypass path for a stator magnetic flux, which runs through the first portion having the narrower width W1 in the opening, is formed. Since the first portion is located on the outer circumferential side with respect to the magnetic pole surface of the permanent magnet, the magnetic flux flowing through the bypass path is less likely to reach the permanent magnet. Consequently, the demagnetization of the permanent magnet can be suppressed.

### BRIEF DESCRIPTION OF THE DRAWINGS

FIG. 1 is a sectional view illustrating a motor of a first embodiment.
FIG. 2 is a sectional view illustrating a rotor of the first embodiment.
FIG. 3 is an enlarged sectional view illustrating a part of the rotor of the first embodiment.
FIG. 4 is a sectional view illustrating a rotor of Comparative Example 1.
FIG. 5 is a diagram illustrating the flow of a reverse magnetic flux in the rotor of Comparative Example 1.
FIG. 6 is a sectional view illustrating a rotor of Comparative Example 2.
FIG. 7 is a diagram illustrating the flow of a reverse magnetic flux in the rotor of Comparative Example 2.
FIG. 8 is a diagram illustrating the flow of a reverse magnetic flux in the rotor of the first embodiment.
FIG. 9 is a diagram illustrating comparison of the demagnetization characteristics among the first embodiment, Comparative Example 1, and Comparative Example 2.
FIG. 10 is a graph illustrating the relationship between a width W1 of a first portion of an opening and the amount of magnetic flux interlinked with a coil of a stator.
FIG. 11(A) is a sectional view illustrating a rotor of a second embodiment, and FIG. 11(B) is an enlarged sectional view illustrating a part of the rotor.
FIG. 12(A) is a sectional view illustrating a rotor of a third embodiment, and FIG. 12(B) is an enlarged sectional view illustrating a part of the rotor.
FIG. 13(A) is a sectional view illustrating a rotor of a fourth embodiment, and FIG. 13(B) is an enlarged sectional view illustrating a part of the rotor.
FIG. 14(A) is a sectional view illustrating a rotor of a fifth embodiment, and FIG. 14(B) is an enlarged sectional view illustrating a part of the rotor.
FIG. 15(A) is a sectional view illustrating a rotor of a sixth embodiment, and FIG. 15(B) is an enlarged sectional view illustrating a part of the rotor.
FIG. 16(A) is a sectional view illustrating a rotor of a seventh embodiment, and FIG. 16(B) is an enlarged sectional view illustrating a part of the rotor.
FIG. 17(A) is a sectional view illustrating a rotor of an eighth embodiment, and FIG. 17(B) is an enlarged sectional view illustrating a part of the rotor.
FIG. 18(A) is a sectional view illustrating a rotor of a ninth embodiment, and FIG. 18(B) is an enlarged sectional view illustrating a part of the rotor.
FIG. 19 is a sectional view illustrating a compressor to which the motor of each embodiment is applicable.
FIG. 20 is a diagram illustrating an air conditioner that includes the compressor illustrated in FIG. 19.

### MODE FOR CARRYING OUT THE INVENTION

### First Embodiment

### (Configuration of Motor)

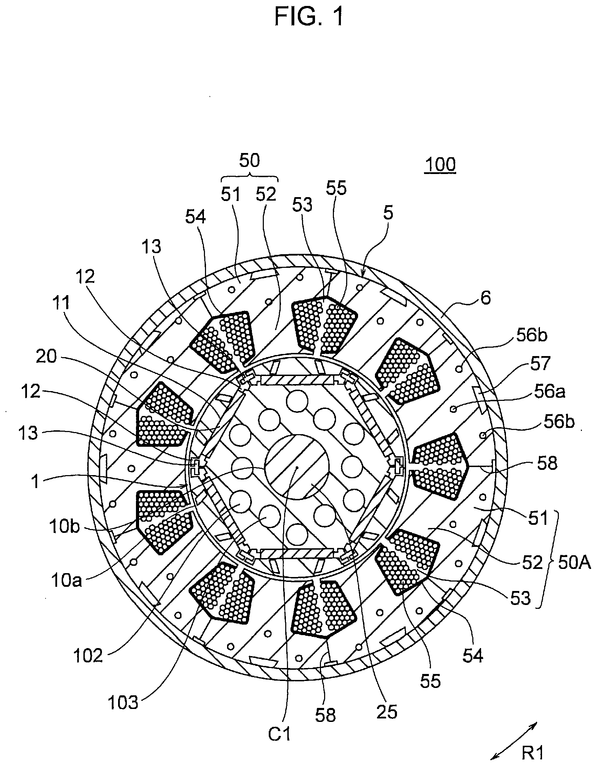

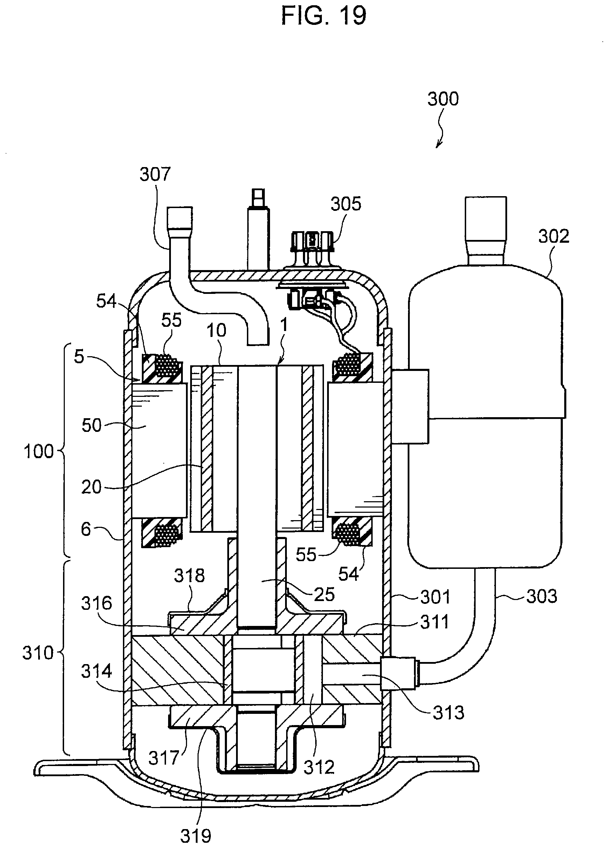

First, a motor 100 of a first embodiment will be described. FIG. 1 is a sectional view illustrating the motor 100 of the first embodiment. The motor 100 is a permanent magnet embedded motor that has permanent magnets 20 embedded in a rotor 1. The motor 100 is used in, for example, a compressor 300 (FIG. 19).

The motor 100 includes the rotor 1 that is rotatable and a stator 5 that is provided to surround the rotor 1. An air gap of, for example, 0.3 to 1.0 mm, is formed between the stator 5 and the rotor 1. The stator 5 is fixed to a cylindrical shell 6, which is a part of the compressor 300.

Hereinafter, the direction of an axis C1, which is a rotating axis of the rotor 1, is referred to as an "axial direction". The circumferential direction about the axis C1 (indicated by an arrow R1 of FIG. 1) is referred to as a "circumferential direction". The radial direction about the axis C1 is referred to as a "radial direction".

### (Configuration of Stator)

The stator 5 includes a stator core 50, an insulating part 54 fixed to the stator core 50, and a coil 55 wound on the stator core 50 via the insulating part 54.

The stator core 50 is formed of steel sheets which are stacked and fixed together in the axial direction by crimping or the like. Each steel sheet is, for example, an electromagnetic steel sheet. The sheet thickness of the steel sheet is, for example, 0.1 to 0.7 mm, and is 0.35 mm in this example.

The stator core 50 has a yoke 51 having an annular shape about the axis C1 and a plurality of teeth 52 extending inward in the radial direction from the yoke 51. An outer circumference of the yoke 51 is fixed to an inner side of the shell 6.

The teeth 52 are formed at equal intervals in the circumferential direction. The number of teeth 52 is nine in this example, but only needs to be two or more. A slot 53 for housing the coil 55 is formed between adjacent teeth 52.

The stator core 50 has a plurality of split cores 50A divided so that each split core 50A includes one tooth 52. The number of split cores 50A is, for example, nine. These split cores 50A are joined at split surfaces 58 formed in the yoke 51, and are coupled together in the circumferential direction. Incidentally, the stator core 50 is not limited to the configuration in which a plurality of split cores 50A are coupled together.

The insulating part 54 is provided between the stator core 50 and the coil 55. The insulating part 54 is formed of, for example, an insulator disposed on an end of the stator core 50 in the axial direction and an insulating film disposed on an inner surface of the slot 53.

The insulator is formed of a resin such as polybutylene terephthalate (PBT). The insulating film is formed of a resin such as polyethylene terephthalate (PET). The insulating film has a thickness of 0.1 to 0.2 mm. Incidentally, the insulating part 54 is not limited to such a configuration, but may be of any configuration as long as the insulating part 54 insulates the stator core 50 and the coil 55 from each other.

The coil 55 is composed of, for example, a magnet wire and wound around the tooth 52 via the insulating part 54. The wire diameter of the coil 55 is, for example, 0.8 mm. The coil 55 is wound in concentrated winding around each tooth 52, for example, in 70 turns. Incidentally, the wire diameter and the number of turns of the coil 55 are determined depending on the required rotation speed, torque, or applied voltage, or the sectional area of the slot 53.

Crimping portions 56a and 56b are formed in the yoke 51. The crimping portions 56a and 56b are used to fix the plurality of steel sheets of the stator core 50 in the axial direction. The crimping portion 56a is formed on a straight line in the radial direction that passes through the center of each tooth 52 in the circumferential direction, while the crimping portions 56b are formed at two locations that are symmetric in the circumferential direction with respect to the straight line. However, the number and arrangement of the crimping portions 56a and 56b may be changed as appropriate.

Concave portions 57 are formed on the outer circumference of the yoke 51. A refrigerant passage in the compressor 300 is formed between the concave portion 57 and the shell 6.

### (Configuration of Rotor)

The rotor 1 has a cylindrical rotor core 10, the permanent magnets 20 fixed to the rotor core 10, and a shaft 25 fixed to a central portion of the rotor core 10. The center axis of the shaft 25 is the axis C1 described above. The rotor core 10 has an outer circumference 10a and an inner circumference 10b. Each of the outer and inner circumferences 10a and 10b is annular about the axis C1.

The rotor core 10 is formed of steel sheets which are stacked in the axial direction and integrated together by crimping or the like. Each steel sheet is, for example, an electromagnetic steel sheet. The sheet thickness of the steel sheet is, for example, 0.1 to 0.7 mm, and is 0.35 mm in this example. The shaft 25 is fixed to the inner circumference 10b of the rotor core 10 by shrink-fitting or press-fitting.

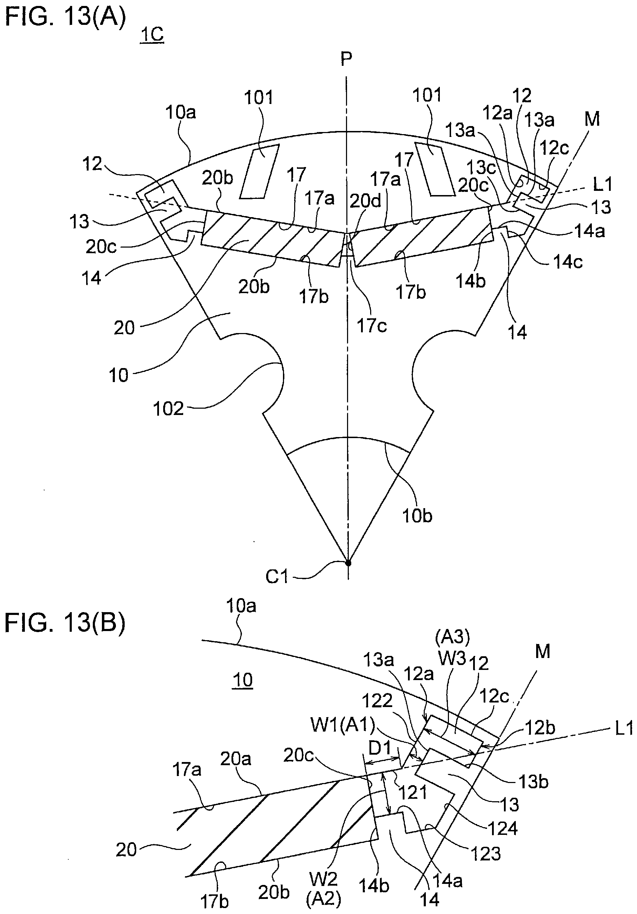

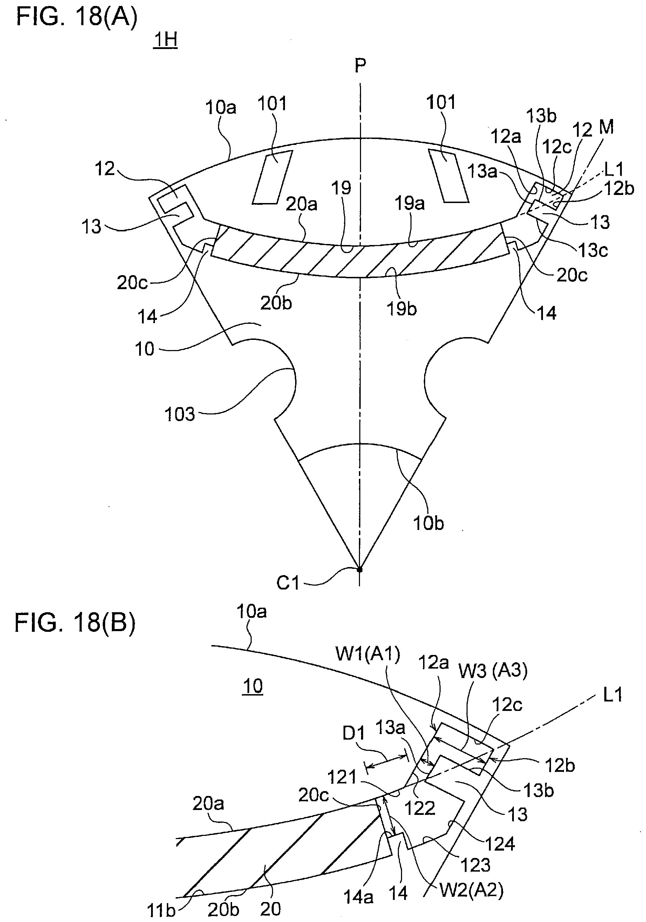

A plurality of magnet insertion holes 11 are formed along the outer circumference 10a of the rotor core 10. The plurality of magnet insertion holes 11 are formed at equal intervals in the circumferential direction. The magnet insertion hole 11 reaches from one end to the other end of the rotor core 10 in the axial direction. The magnet insertion hole 11 extends linearly in a plane perpendicular to the axis C1. Incidentally, the magnet insertion hole 11 may have a V-shape or a curved shape (see FIGS. 13 (A) and 18 (A)).

One permanent magnet 20 is disposed in each magnet insertion hole 11. Each magnet insertion hole 11 corresponds to one magnetic pole. The number of magnet insertion holes 11 is six in this example, and therefore the number of magnetic poles is six. Incidentally, the number of magnetic poles is not limited to six, but only needs to be two or more. The permanent magnets 20 adjacent to each other in the circumferential direction have opposite poles on the outer side in the radial direction.

The permanent magnet 20 is a member having a flat plate shape. The permanent magnet 20 has a width in the circumferential direction and a thickness in the radial direction of the rotor core 10. The thickness of the permanent magnet 20 is, for example, 2 mm. The permanent magnet 20 is composed of a neodymium rare earth magnet that contains, for example, neodymium (Nd), iron (Fe), and boron (B). The permanent magnet 20 is magnetized in the thickness direction.

The neodymium rare earth magnet has the characteristic such that its coercive force decreases as temperature increases. When the motor 100 is used in the compressor 300, the temperature of the permanent magnet 20 reaches 100°C or higher, and its coercive force decreases at a decreasing rate of -0.5 to -0.6 %/K depending on the temperature. Thus, dysprosium (Dy) may be added to the permanent magnet 20 to improve the coercive force.

However, when Dy is added to the permanent magnet 20, the residual magnetic flux density of the permanent magnet 20 decreases. As the residual magnetic flux density decreases, the magnet torque of the motor 100 decreases and the current required to generate the desired torque increases, with the result that copper loss increases. In order to improve the motor efficiency, it is desirable that the adding amount of Dy is as little as possible.

Holes 102 and 103, which serve as passages for the refrigerant, are formed on the inner side of the magnet insertion holes 11 in the radial direction. The hole 102 is formed at a position corresponding to a pole center, while the hole 103 is formed at a position corresponding to an inter-pole portion. However, the arrangement of the holes 102 and 103 may be changed as appropriate.

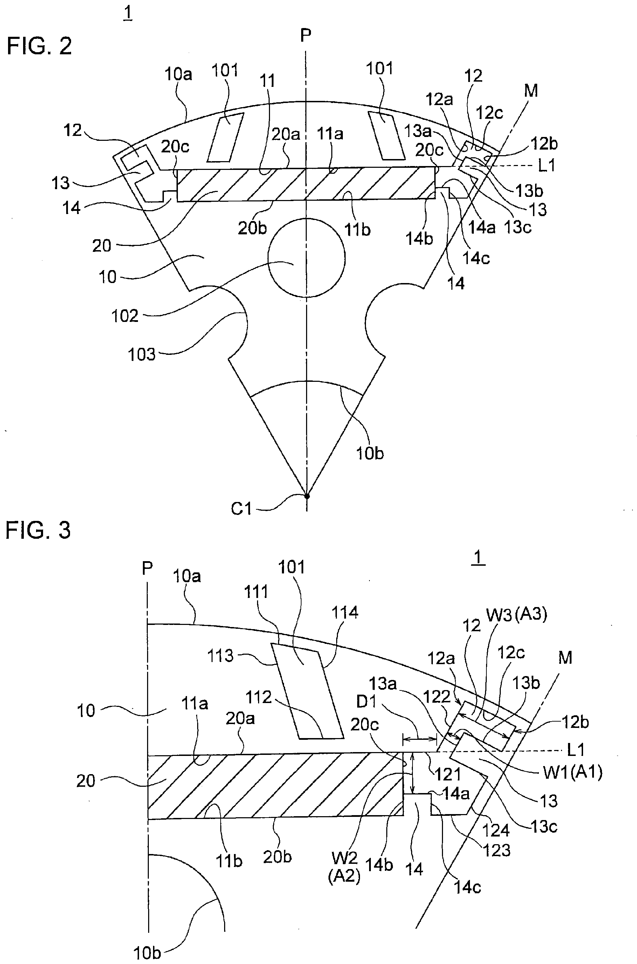

FIG. 2 is a diagram illustrating a region corresponding to one magnetic pole of the rotor 1, i.e., a region including one magnet insertion hole 11. The center of the magnet insertion hole 11 in the circumferential direction is the pole center P. A straight line that passes through the pole center P in the radial direction is referred to as a magnetic pole center line. The boundary between adjacent magnetic poles is the inter-pole portion M.

The magnet insertion hole 11 extends in a direction perpendicular to the magnetic pole center line. The permanent magnet 20 has a magnetic pole surface 20a on the outer side in the radial direction, a magnetic pole surface 20b on the inner side in the radial direction, and end surfaces 20c on both sides in the circumferential direction. The magnetic pole surface 20a is also referred to as a first magnetic pole surface, while the magnetic pole surface 20b is also referred to as a second magnetic pole surface.

Each of the magnetic pole surfaces 20a and 20b extends in a direction perpendicular to the magnetic pole center line. An extension line of the magnetic pole surface 20a in a plane perpendicular to the axis C1 is defined as a reference line L1. The reference line L1 is a straight line in the first embodiment, but is not limited to a straight line (see FIG. 18(A)).

The magnet insertion hole 11 has an outer end edge 11a on the outer side in the radial direction and an inner end edge 11b on the inner side in the radial direction. The outer end edge 11a is also referred to as an insertion hole outer end edge. The inner end edge 11b is also referred to as an insertion hole inner end edge. The outer end edge 11a of the magnet insertion hole 11 faces the magnetic pole surface 20a of the permanent magnet 20, while the inner end edge 11b of the magnet insertion hole 11 faces the magnetic pole surface 20b of the permanent magnet 20.

Openings 12 are formed on both sides of the magnet insertion hole 11 in the circumferential direction. The openings 12 are provided to suppress the leakage of magnetic flux between the adjacent magnetic poles.

Protrusions 14 that are in contact with the end surfaces 20c of the permanent magnet 20 are formed on both sides of the magnet insertion hole 11 in the circumferential direction. Each protrusion 14 is formed on an end edge portion 123 (FIG. 3) of an inner end edge 12b, which will be mentioned later, of the opening 12 so as to contact the end surface 20c of the permanent magnet 20.

The protrusion 14 has a tip end 14a on the outer side in the radial direction, a side end 14b that is in contact with the end surface 20c of the permanent magnet 20, and a side end 14c opposite to the side end 14b. The side end 14b of each protrusion 14 is in contact with the end surface 20c of the permanent magnet 20, whereby the permanent magnet 20 is positioned so as not to move within the magnet insertion hole 11.

FIG. 3 is an enlarged diagram illustrating a part of the rotor 1. Slits 101 are formed on the outer side of the magnet insertion hole 11 in the radial direction. Each slit 101 has a side 111 extending along the outer circumference 10a of the rotor core 10, a side 112 extending along the magnet insertion hole 11, and sides 113 and 114 each of which is inclined so as to approach the pole center P toward the outer side in the radial direction. Two slits 101 (FIG. 2) are formed symmetrically with respect to the pole center P in each magnetic pole.

The slits 101 are used to smooth the distribution of magnetic flux from the permanent magnet 20 toward the stator 5 to thereby suppress torque pulsation. Incidentally, the number, arrangement, and shapes of the slits 101 are not limited. The rotor core 10 may also be configured to have no slit 101.

Next, the specific shape of each opening 12 will be described. The opening 12 is connected to an end of the magnet insertion hole 11 in the circumferential direction. The magnet insertion hole 11 is a portion in which the permanent magnet 20 is inserted, while the opening 12 is a portion located on the outer side of the permanent magnet 20 in the circumferential direction.

The opening 12 extends from the end of the magnet insertion hole 11 in the circumferential direction along the reference line L1 and further extends beyond the above-described reference line L1 to the outer side in the radial direction, i.e., toward the outer circumference 10a of the rotor core 10.

The opening 12 has an outer end edge 12a extending from an end of the outer end edge 11a of the magnet insertion hole 11, the inner end edge 12b extending from an end of the inner end edge 11b of the magnet insertion hole 11, and a circumferential end edge 12c extending along the outer circumference 10a of the rotor core 10.

The outer end edge 12a has an end edge portion 121 located on an extension line of the outer end edge 11a of the magnet insertion hole 11 and an end edge portion 122 extending from a terminal end of the end edge portion 121 toward the outer circumference 10a. The end edge portion 121 is also referred to as a first end edge portion. The end edge portion 122 is also referred to as a second end edge portion.

The inner end edge 12b has the end edge portion 123 located on an extension line of the inner end edge 11b of the magnet insertion hole 11, and an end edge portion 124 extending from a terminal end of the end edge portion 123 toward the outer circumference 10a. The end edge portion 123 is also referred to as a first end edge portion. The end edge portion 124 is also referred to as a second end edge portion.

Of the outer end edge 12a and the inner end edge 12b, the outer end edge 12a is located on the side closer to the pole center P, and the inner end edge 12b is located on the side closer to the inter-pole portion M.

The outer end edge 12a and the inner end edge 12b face each other. More specifically, the end edge portion 121 of the outer end edge 12a and the end edge portion 123 of the inner end edge 12b face each other, while the end edge portion 122 of the outer end edge 12a and the end edge portion 124 of the inner end edge 12b face each other. The end edge portions 121 and 123 are parallel to each other, but they are not necessarily parallel to each other. The end edge portions 122 and 124 are parallel to each other, but they are not necessarily parallel to each other.

The circumferential end edge 12c connects a radially outer end of the outer end edge 12a and a radially outer end of the inner end edge 12b. A thin-walled portion is formed between the circumferential end edge 12c and the outer circumference 10a of the rotor core 10. The width of the thin-walled portion is desirably as narrow as possible in order to suppress leakage magnetic flux between adjacent magnetic poles. In this example, the width of the thin-walled portion is the same as the thickness of the steel sheet of the rotor core 10.

A convex portion 13 protruding toward the outer end edge 12a is formed on the inner end edge 12b. In this example, the convex portion 13 protrudes from the end edge portion 124 of the inner end edge 12b toward the end edge portion 122 of the outer end edge 12a. The convex portion 13 has a tip end 13a facing the outer end edge 12a of the opening 12, a side end 13b facing the circumferential end edge 12c, and a side end 13c facing the end surface 20c of the permanent magnet 20.

A part of the tip end 13a of the convex portion 13 is located on the outer side in the radial direction with respect to the reference line L1. However, the entire tip end 13a of the convex portion 13 may be located on the outer side in the radial direction with respect to the reference line L1. That is, it is sufficient that at least a part of the tip end 13a of the convex portion 13 is located on the outer side in the radial direction with respect to the reference line L1.

An area between the outer end edge 12a of the opening 12 and the tip end 13a of the convex portion 13 is defined as a first portion A1. In this example, the first portion A1 is an area between the end edge portion 122 of the outer end edge 12a and the tip end 13a of the convex portion 13. The width of the first portion A1, i.e., the shortest distance between the outer end edge 12a of the opening 12 and the tip end 13a of the convex portion 13 is referred to as a width W1.

On the permanent magnet 20 side with respect to the first portion A1 in the opening 12, an area where the distance between the outer end edge 12a and the inner end edge 12b is shortest is an area between the end edge portion 121 of the outer end edge 12a and the tip end 14a of the protrusion 14. This area is defined as a second portion A2. The width of the second portion A2, i.e., the shortest distance between the outer end edge 12a of the opening 12 and the tip end 14a of the protrusion 14 is referred to as a width W2.

The opening 12 also has a third portion A3 located on the outer circumference 10a side with respect to the first portion A1 and having a width W3 wider than the width W1. The width W3 is the shortest distance between the outer end edge 12a and the inner end edge 12b, in an area on the outer circumference 10a side with respect to the first portion A1.

In this example, the width W3 is wider than the width W2 (W2 < W3). However, the width W2 and the width W3 may be the same.

That is, the opening 12 has the first portion A1 having the width W1, the second portion A2 having the width W2 wider than the width W1, and the third portion A3 having the width W3 wider than the width W1. The second portion A2 is located on the permanent magnet 20 side with respect to the first portion A1, i.e., between the first portion A1 and the permanent magnet 20. The third portion A3 is located on the outer circumference 10a side with respect to the first portion A1, i.e., between the first portion A1 and the outer circumference 10a.

A part of the first portion A1 of the opening 12 is located on the outer circumference 10a side with respect to the reference line L1, i.e., on the outer side in the radial direction. However, the entire first portion A1 of the opening 12 may be located on the outer side in the radial direction with respect to the reference line L1. That is, it is sufficient that at least a part of the first portion A1 is located on the outer side in the radial direction with respect to the reference line L1.

The shortest distance from the end surface 20c of the permanent magnet 20 to the first portion A1 of the opening 12 is referred to as a distance D1. This distance D1 is greater than or equal to the width W1 of the first portion A1 of the opening 12 (D1 ≥ W1).

### (FUNCTION)

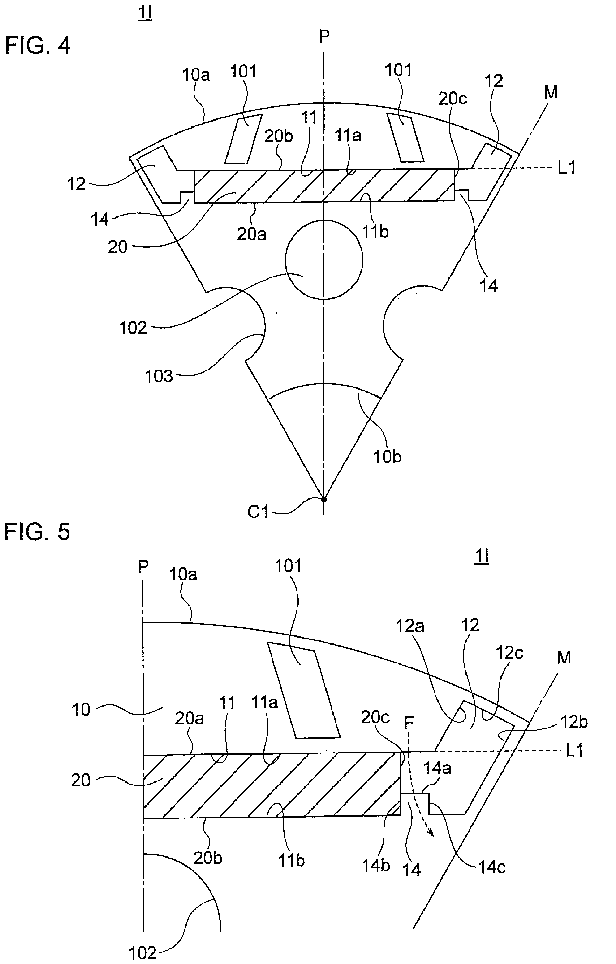

Here, Comparative Examples 1 and 2 to be compared with the first embodiment will be described. FIG. 4 is a diagram illustrating a rotor 1I of Comparative Example 1. The rotor 1I of Comparative Example 1 differs from the rotor 1 of the first embodiment in that no convex portion 13 (FIGS. 2 and 3) is provided in the opening 12. The rotor 1I of Comparative Example 1 is configured in a similar manner to the rotor 1 of the first embodiment in other respects.

In the motor 100, there are cases where a current larger than that during a normal operation may flow through the coil 55 of the stator 5. Such cases are, for example, when a large load is applied to the motor 100, when the operation of the motor 100 is locked, when the motor 100 starts up, when the coil 55 of the stator 5 is short-circuited, or the like.

When a large current flows through the coil 55 of the stator 5, the magnetic flux generated by the current in the coil 55 acts on the permanent magnet 20. The magnetic flux flowing through the permanent magnet 20 in the direction opposite to the magnetization direction is referred to as a reverse magnetic flux. When the reverse magnetic flux flows through the permanent magnet 20, demagnetization of the permanent magnet 20 may occur.

In particular, when the coil 55 is wound in concentrated winding, a closed loop of the magnetic flux is generated between adjacent teeth 52. For example, the magnetic flux flows from one tooth 52 around which a U-phase coil 55 is wound to the adjacent tooth 52 around which a V-phase coil 55 is wound. Thus, the reverse magnetic flux from the stator 5 is likely to flow into an outer circumferential region of the rotor core 10 facing both teeth 52.

FIG. 5 is a diagram illustrating the flow of reverse magnetic flux from the stator 5 in the rotor 11. The reverse magnetic flux flowing into the rotor core 10 tends to flow through a portion having a lower magnetic resistance, and thus the reverse magnetic flux is directed to the thin-walled portion between the outer circumference 10a of the rotor core 10 and the opening 12 while circumventing the magnet insertion hole 11 and the opening 12 which have a high magnetic resistance. However, since the magnetic path in the thin-walled portion is narrow, when a certain amount of magnetic flux flows, magnetic saturation occurs and no magnetic flux flows through the thin-walled portion. The magnet insertion hole 11 and the opening 12 are hollow inside and therefore have high magnetic resistance, but the width of the opening 12 is reduced in an area where the protrusion 14 is formed, and thus the magnetic resistance partially decreases.

Therefore, the reverse magnetic flux from the stator 5 flows to the protrusion 14 concentratedly as indicated by an arrow F. As the protrusion 14 is in contact with the end surface 20c of the permanent magnet 20, demagnetization of the permanent magnet 20 occurs at the end surface 20c when the reverse magnetic flux is concentrated on the protrusion 14.

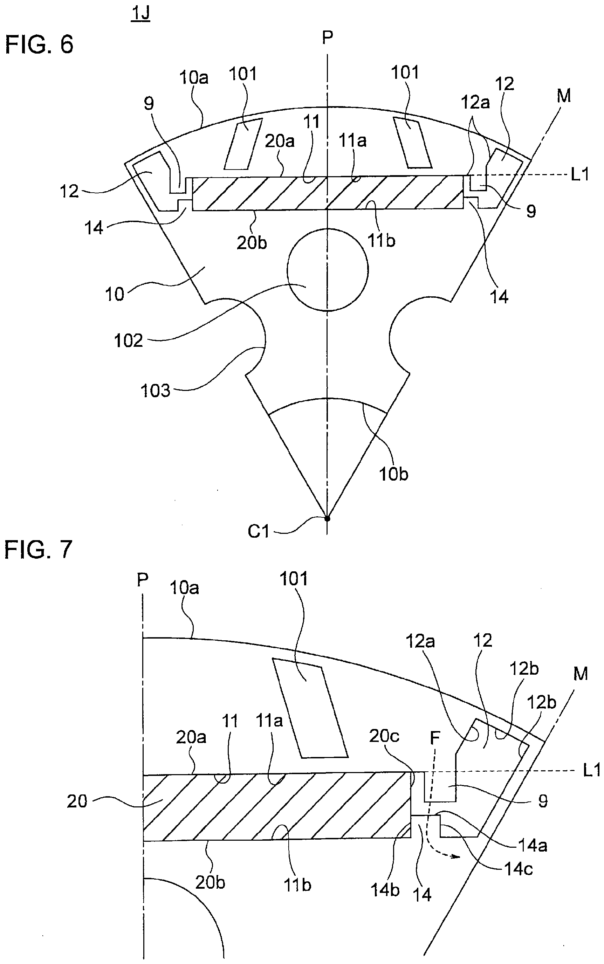

FIG. 6 is a diagram illustrating a rotor 1J of Comparative Example 2. The rotor 1J of Comparative Example 2 differs from the rotor 1I of Comparative Example 1 (FIGS. 4 and 5) in that a protrusion 9 is provided on the outer end edge 12a of the opening 12. The protrusion 9 protrudes toward the protrusion 14 and faces the protrusion 14.

FIG. 7 is a diagram illustrating the flow of reverse magnetic flux from the stator 5 in the rotor 1J of Comparative Example 2. In the rotor 1J of Comparative Example 2, the protrusion 9 is provided on the outer end edge 12a of the opening 12, and the outer circumferential region of the rotor core 10 is continuous to the protrusion 9. The magnetic resistance is locally reduced in an area where the protrusions 9 and 14 face each other in the opening 12.

Thus, the reverse magnetic flux from the stator 5 flows from the outer circumferential region of the rotor core 10 to the protrusion 14 through the protrusion 9 as indicated by the arrow F. If the reverse magnetic flux is concentrated on the protrusion 14, the demagnetization occurs at the end surface 20c of the permanent magnet 20, as in Comparative Example 1. Further, if the magnetic saturation occurs at the protrusion 9, the magnetic flux flows to the permanent magnet 20 in vicinity of the protrusion 9, and causes the demagnetization at the end surface 20c of the permanent magnet 20.

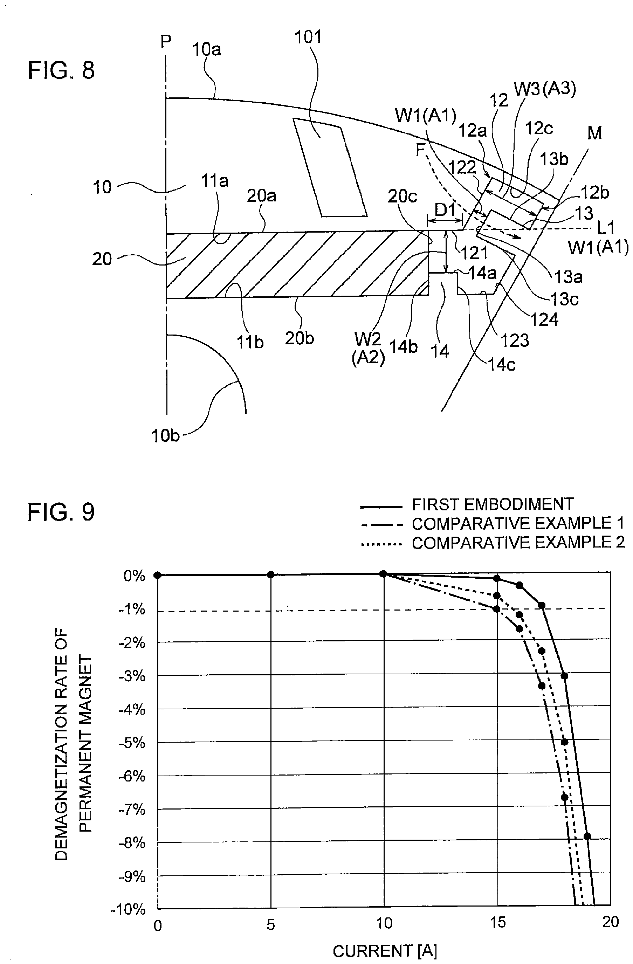

FIG. 8 is a diagram illustrating the flow of the reverse magnetic flux from the stator 5 in the rotor 1 of the first embodiment. In the first embodiment, the opening 12 includes the first portion A1 having the width W1 and the second portion A2 having the width W2.

The second portion A2 of the opening 12 is the narrowest portion at the permanent magnet 20 side with respect to the first portion A1. The width W2 of the second portion A2 is wider than the width W1 of the first portion A1. In other words, a portion in the opening 12 located on the permanent magnet 20 side with respect to the first portion A1 is wider than the first portion A1 and thus the magnetic resistance therein is high.

Thus, the reverse magnetic flux from the stator 5 flows from the outer circumferential region of the rotor core 10 through the first portion A1 of the opening 12 as indicated by the arrow F. That is, a bypass path for the reverse magnetic flux running through the first portion A1 is formed.

At least a part of the first portion A1 is located on the outer side in the radial direction with respect to the reference line L1 obtained by extending the magnetic pole surface 20a of the permanent magnet 20. Thus, the reverse magnetic flux flowing through the bypass path that runs through the first portion A1 is directed in a direction away from the permanent magnet 20. Consequently, the reverse magnetic flux reaching the permanent magnet 20 can be reduced, and the demagnetization of the permanent magnet 20 can be suppressed.

Meanwhile, if the magnetic saturation occurs in the bypass path including the first portion A1 of the opening 12, the magnetic flux tends to flow around the first portion A1. For this reason, the distance D1 from the end surface 20c of the permanent magnet 20 to the first portion A1 of the opening 12 is set to be greater than or equal to the width W1. The distance D1 is, for example, 1.5 mm.

Since the distance D1 from the end surface 20c of the permanent magnet 20 to the first portion A1 of the opening 12 is secured in this way, the magnetic flux is less likely to reach the permanent magnet 20, and thus the demagnetization of the permanent magnet 20 can be suppressed.

In this example, the opening 12 is provided with the protrusion 14. However, it is also possible to employ a configuration in which no protrusion 14 is provided. In that case, the shortest distance between the end edge portion 121 of the outer end edge 12a of the opening 12 and the end edge portion 123 of the inner end edge 12b of the opening 12 is the width W2.

### (Demagnetization Characteristics)

FIG. 9 is a graph illustrating comparison of the demagnetization characteristics of the permanent magnet 20 between the first embodiment and Comparative Examples 1 and 2. The horizontal axis indicates the current value of the current flowing through the coil 55. The vertical axis indicates the demagnetization rate of the permanent magnet 20.

The demagnetization rate is represented by the rate of decrease in the amount of magnetic flux interlinked with the coil 55 (the amount of interlinked magnetic flux). Here, the demagnetization rate is defined as the rate of decrease in the amount of interlinked magnetic flux with respect to a reference value which is the amount of interlinked magnetic flux when the rotor 1 is rotated by an external power without applying current to the coil 55. Thus, the demagnetization rate is a negative value.

The motor 100 is placed in the atmosphere of 140°C. This temperature is the highest temperature at which the motor 100 is used in the compressor 300.

When the current value in the coil 55 is small, the permanent magnet 20 is not demagnetized, and the demagnetization rate is zero. As the current value increases, the amount of magnetic flux interlinked with the coil 55 decreases due to the demagnetization of the permanent magnet 20.

The demagnetization of the permanent magnet 20 leads to decrease in the output of the motor 100, and causes deterioration in the performance of the compressor 300 or an air conditioner 400. Further, an induced voltage generated by the magnetic flux interlinked with the coil 55 changes, which may affect the controllability of the motor 100.

In general, it is required to suppress the demagnetization rate of the motor 100 to 1% or less. Thus, an inverter circuit that controls the motor 100 is provided with a current cut-off circuit to cut off the current before the demagnetization rate reaches 10.

In FIG. 9, a current value at the demagnetization rate of 1% is 14.7 [A] in Comparative Example 1 and 15.6 [A] in Comparative Example 2, but it increases to 17.0 [A] in the first embodiment. In the first embodiment, a larger current can be made to flow without causing demagnetization of the permanent magnet 20, and thus the motor efficiency can be improved.

When the same current flows through the coils 55 in the first embodiment and Comparative Examples 1 and 2, demagnetization of the permanent magnet 20 is less likely to occur in the first embodiment than in Comparative Examples 1 and 2. Thus, it is possible to reduce the amount of a rare earth element such as Dy added to the permanent magnet 20.

By reducing the content of the rare earth element in the permanent magnet 20, preferably to 0% by weight, the residual magnetic flux density of the permanent magnet 20 can be increased. Thus, the magnet torque can be increased, and the current value required to generate the same output can be reduced. That is, the copper loss generated in the coil 55 can be reduced, so that the motor efficiency can be improved.

### (Optimal Range of Width W1 of First Portion A1 of Opening 12)

In order to efficiently guide the reverse magnetic flux from the stator 5 to the bypass path running through the first portion A1 of the opening 12, it is desirable to make the width W1 of the first portion A1 narrow. Meanwhile, if the width W1 of the first portion A1 is too narrow, the magnetic flux exiting from the permanent magnet 20 may be short-circuited through the first portion A1. That is, for example, the magnetic flux exiting from the magnetic pole surface 20a may return to the magnetic pole surface 20b through the first portion A1.

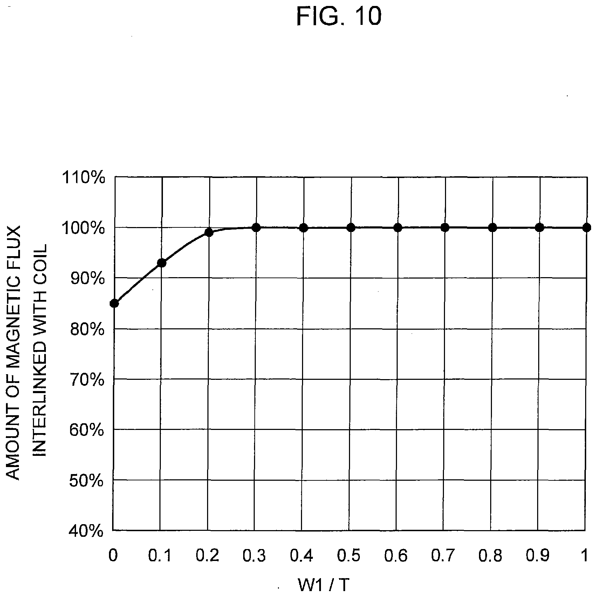

FIG. 10 is a graph showing the relationship between the width W1 of the first portion A1 and the amount of magnetic flux interlinked with the coil 55. The horizontal axis indicates a value obtained by dividing the width W1 of the first portion A1 by the thickness T of the permanent magnet 20, i.e., W1/T. The vertical axis indicates the amount of magnetic flux interlinked with the coil 55 when no current flows through the coil 55. The amount of magnetic flux interlinked with the coil 55 is expressed as the rate of change with respect to a reference value which is the amount of interlinked magnetic flux when W1/T = 1.

As can be seen from FIG. 10, the amount of magnetic flux interlinked with the coil 55 is small when W1/T is less than 0.2. This is because the magnet flux exiting from the permanent magnet 20 is short-circuited through the first portion A1 since the width W1 of the first portion A1 is too narrow.

When W1/T increases to 0.2 or more, the amount of magnetic flux interlinked with the coil 55 increases and converges to a constant value. However, if W1/T exceeds 0.5, the effect of guiding the reverse magnetic flux to the bypass path including the first portion A1 and suppressing the demagnetization of the permanent magnet 20 decreases.

Thus, in order to achieve both the effect of preventing short-circuit of the magnetic flux exiting from the permanent magnet 20 and the effect of suppressing the demagnetization of the permanent magnet 20, it is desirable that the W1/T is within a range of 0.2 ≤ W1/T ≤ 0.5.

### (Effects of Embodiment)

As described above, in the rotor 1 of the first embodiment, the opening 12 has the outer end edge 12a extending outward in the radial direction from the end of the outer end edge 11a of the magnet insertion hole 11 in the circumferential direction, and the inner end edge 12b facing the outer end edge 12a. In the first portion A1 of the opening 12, the outer end edge 12a and the inner end edge 12b (more specifically, the tip end 13a of the convex portion 13) face each other across the width W1. In the second portion A2, the outer end edge 12a and the inner end edge 12b face each other across the width W2 wider than the width W1. The second portion A2 is located between the first portion A1 and the permanent magnet 20. At least a part of the first portion A1 is located on the outer side in the radial direction with respect to the reference line L1 obtained by extending the magnetic pole surface 20a of the permanent magnet 20.

With such a configuration, the reverse magnetic flux from the stator 5 flows through the bypass path running through the first portion A1 of the opening 12. At least a part of the first portion A1 is located on the outer side in the radial direction with respect to the reference line L1, and thus the reverse magnetic flux flowing through the bypass path is directed in a direction away from the permanent magnet 20. Consequently, the reverse magnetic flux reaching the permanent magnet 20 can be reduced, and thus the demagnetization of the permanent magnet 20 can be suppressed.

The third portion A3 having the width W3 wider than the width W1 is provided on the outer circumference 10a side, i.e., on the outer side in the radial direction, with respect to the first portion A1. Thus, the length in the circumferential direction of the thin-walled portion between the opening 12 and the outer circumference 10a can be increased. Thus, the magnetic flux leakage between the adjacent magnetic poles can be suppressed.

Since the convex portion 13 is formed on the inner end edge 12b of the opening 12, the outer circumferential region of the rotor core 10 and the convex portion 13 are not continuous to each other. Thus, the reverse magnetic flux from the stator 5 is less likely to flow to the permanent magnet 20 through the convex portion 13, and thus the effect of suppressing the demagnetization of the permanent magnet 20 can be enhanced.

In addition, the distance D1 from the end surface 20c of the permanent magnet 20 in the circumferential direction to the first portion A1 is greater than or equal to the width W1 of the first portion A1 of the opening 12. Thus, the reverse magnetic flux is less likely to reach the permanent magnet 20, even when the magnetic saturation occurs in the bypass path including the first portion A1. Thus, the effect of suppressing the demagnetization of the permanent magnet 20 can be enhanced.

Since the width W1 of the first portion A1 of the opening 12 and the thickness T of the permanent magnet 20 satisfy 0.2 ≤ W1/T ≤ 0.5, the demagnetization of the permanent magnet 20 can be suppressed while preventing the short-circuit of the magnetic flux exiting from the permanent magnet 20.

Further, since the protrusion 14 is provided in the opening 12 for positioning the permanent magnet 20, the movement of the permanent magnet 20 within the magnet insertion hole 11 is restricted, and thus vibration and noise can be suppressed.

### Second Embodiment

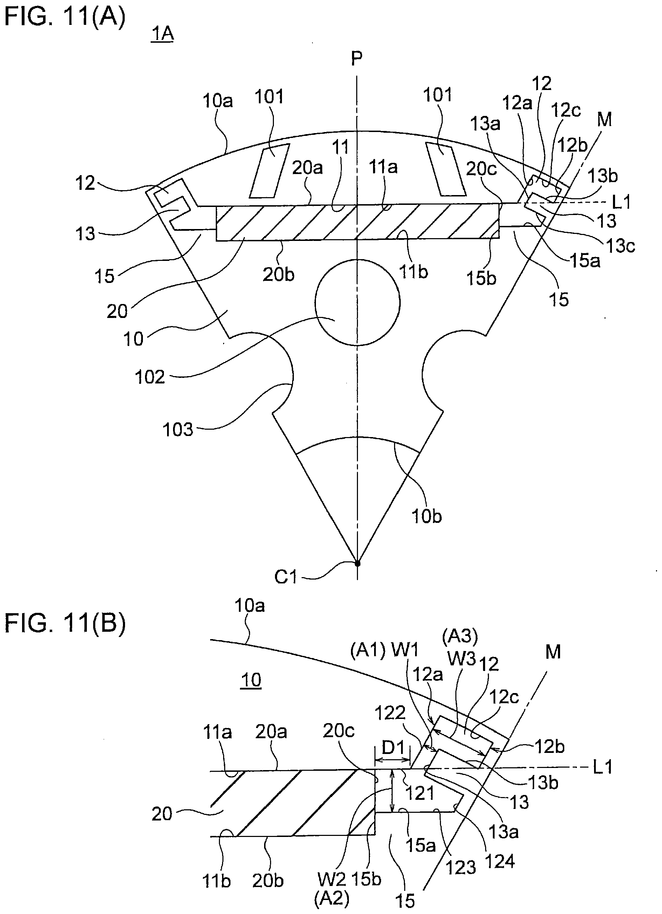

FIG. 11(A) is a diagram illustrating a rotor 1A of a second embodiment. In the rotor 1A of the second embodiment, the length in the circumferential direction of a protrusion 15 for positioning the permanent magnet 20 is longer than the length in the circumferential direction of the protrusion 14 of the first embodiment.

The shape of the outer end edge 12a of the opening 12 is the same as in the first embodiment. The protrusions 15 are formed on the inner end edge 12b of the opening 12. Each protrusion 15 has a tip end 15a facing the outer side in the radial direction and a side end 15b that is in contact with the end surface 20c of the permanent magnet 20.

FIG. 11(B) is an enlarged diagram illustrating a part of the rotor 1A of the second embodiment. As described in the first embodiment, the opening 12 has the outer end edge 12a, the inner end edge 12b, and the circumferential end edge 12c. The outer end edge 12a has the end edge portions 121 and 122, and the inner end edge 12b has the end edge portions 123 and 124.

The tip end 15a of the protrusion 15 extends in parallel to the end edge portion 121 of the outer end edge 12a and also extends to reach the end edge portion 124 of the inner end edge 12b. That is, the end edge portion 123 of the inner end edge 12b is constituted by the tip end 15a of the protrusion 15. The end edge portion 124 of the inner end edge 12b extends outward in the radial direction from the terminal end of the end edge portion 123.

As described in the first embodiment, the convex portion 13 protruding toward the end edge portion 122 of the outer end edge 12a is formed on the end edge portion 124 of the inner end edge 12b. At least a part of the tip end 13a of the convex portion 13 is located on the outer side in the radial direction with respect to the above-described reference line L1.

An area between the end edge portion 122 of the outer end edge 12a and the tip end 13a of the convex portion 13 is defined as the first portion A1. The width of the first portion A1, i.e., the shortest distance between the outer end edge 12a of the opening 12 and the tip end 13a of the convex portion 13 is the width W1. An area between the end edge portion 121 of the outer end edge 12a and the tip end 15a of the protrusion 15 is defined as the second portion A2. The width of the second portion A2 is the width W2 (> W1) .

That is, the opening 12 has the first portion A1 having the width W1 and the second portion A2 having the width W2 wider than the width W1, and the second portion A2 is located on the permanent magnet 20 side with respect to the first portion A1. At least a part of the first portion A1 is located on the outer side in the radial direction with respect to the reference line L1.

Thus, the reverse magnetic flux from the stator 5 flows in a direction away from the permanent magnet 20 through the bypass path running through the first portion A1. Consequently, the reverse magnetic flux reaching the permanent magnet 20 can be reduced, and thus the demagnetization of the permanent magnet 20 can be suppressed.

The third portion A3 having the width W3 wider than the width W1 is provided on the outer side in the radial direction with respect to the first portion A1 of the opening 12. Thus, the length in the circumferential direction of the thin-walled portion between the opening 12 and the outer circumference 10a can be increased, and thus the magnetic flux leakage between the adjacent magnetic poles can be suppressed.

The distance D1 from the end surface 20c of the permanent magnet 20 to the first portion A1 of the opening 12 is greater than or equal to the width W1 of the first portion A1. Thus, the reverse magnetic flux reaching the permanent magnet 20 can be reduced even when the magnetic saturation occurs in the bypass path including the first portion A1.

In other respects, the motor of the second embodiment is configured in a similar manner to the motor 100 of the first embodiment.

In the second embodiment, the length in the circumferential direction of the protrusion 15 is longer than the length in the circumferential direction of the protrusion 14 in the first embodiment, and thus the protrusion 15 has high strength. Thus, in addition to the effects of the first embodiment, the reliability of the motor 100 can be enhanced.

### Third Embodiment

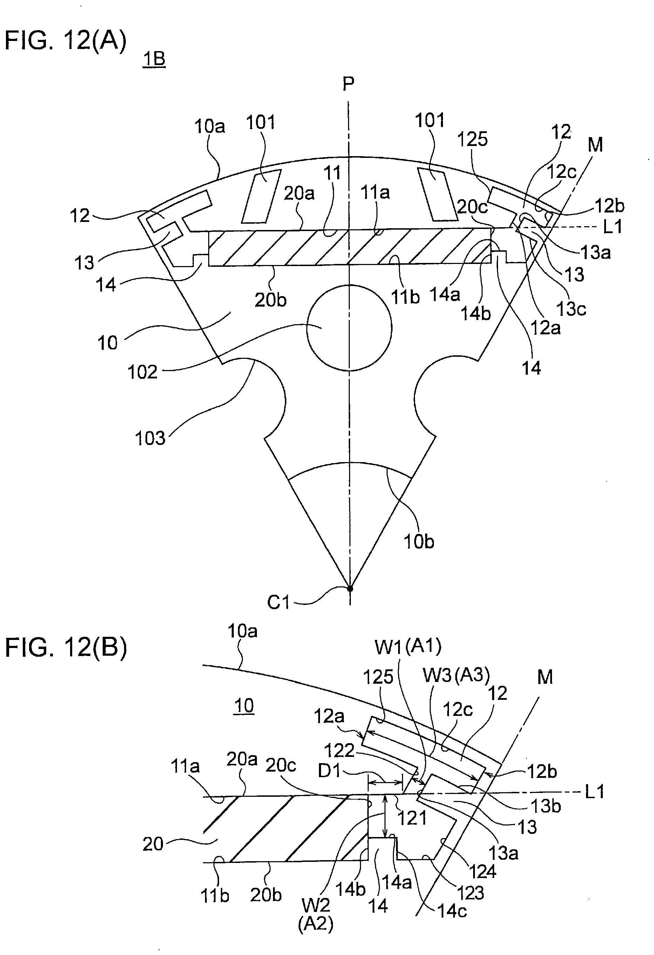

FIG. 12(A) is a diagram illustrating a rotor 1B of a third embodiment. In the rotor 1B of the third embodiment, the opening 12 has a shape such that the outer circumference 10a side thereof protrudes toward the pole center P.

The outer end edge 12a of the opening 12 of the third embodiment has a concave portion 125 extending toward the center pole P. The concave portion 125 is located on the outer side in the radial direction with respect to the convex portion 13. In this example, an outer end edge of the concave portion 125 in the radial direction is on an extension line of the circumferential end edge 12c, and an inner end edge of the concave portion 125 in the radial direction is on an extension line of the side end 13b of the convex portion 13.

FIG. 12(B) is an enlarged diagram illustrating a part of the rotor 1B of the third embodiment. As described in the first embodiment, the opening 12 has the outer end edge 12a, the inner end edge 12b, and the circumferential end edge 12c. The outer end edge 12a has the end edge portions 121 and 122, and the inner end edge 12b has the end edge portions 123 and 124. The protrusion 14 for positioning the permanent magnet 20 is formed on the end edge portion 123 of the inner end edge 12b.

As described in the first embodiment, the convex portion 13 protruding toward the end edge portion 122 of the outer end edge 12a is formed on the end edge portion 124 of the inner end edge 12b. At least a part of the tip end 13a of the convex portion 13 is located on the outer side in the radial direction with respect to the above-described reference line L1.

An area between the end edge portion 122 of the outer end edge 12a and the tip end 13a of the convex portion 13 is defined as the first portion A1. The width of the first portion A1, i.e., the shortest distance between the outer end edge 12a of the opening 12 and the tip end 13a of the convex portion 13 is the width W1. An area between the end edge portion 121 of the outer end edge 12a and the tip end 14a of the protrusion 14 is defined as the second portion A2. The width of the second portion A2 is the width W2 (> W1) .

That is, the opening 12 has the first portion A1 having the width W1 and the second portion A2 having the width W2 wider than the width W1, and the second portion A2 is located on the permanent magnet 20 side with respect to the first portion A1. At least a part of the first portion A1 is located on the outer side in the radial direction with respect to the reference line L1.

Thus, the reverse magnetic flux from the stator 5 flows in a direction away from the permanent magnet 20 through the bypass path running through the first portion A1. Consequently, the reverse magnetic flux reaching the permanent magnet 20 can be reduced, and thus the demagnetization of the permanent magnet 20 can be suppressed.

The opening 12 also has the third portion A3 located on the outer circumference 10a side with respect to the first portion A1 and having the width W3 wider than the width W1. The width W3 is the shortest distance between the outer end edge 12a and the inner end edge 12b, in the area located on the outer circumference 10a side with respect to the first portion A1.

In the third embodiment, since the outer end edge 12a has a concave portion 125 on the outer circumference 10a side with respect to the first portion A1, the width W3 of the third portion A3 of the opening 12 is wider than the width W2 of the second portion A2. Thus, the length in the circumferential direction of the thin-walled portion between the opening 12 and the outer circumference 10a can be increased, and thus the magnetic flux leakage between the adjacent magnetic poles can be suppressed.

As illustrated in FIG. 12(A), the area sandwiched between two openings 12 in the rotor core 10 is an area where the magnetic flux enters into and exits from the permanent magnet 20. The width of this area in the circumferential direction is also referred to as an opening width of the magnetic pole.

In the third embodiment, the opening width of the magnetic pole can be set to an appropriate width by adjusting the protruding amount of the concave portion 125 of the outer end edge 12a of each opening 12 toward the pole center P side. Thus, the harmonic component of the magnetic flux distribution can be reduced and cogging torque can be reduced, so that noise of the motor can be reduced.

The distance D1 from the end surface 20c of the permanent magnet 20 to the first portion A1 of the opening 12 is greater than or equal to the width W1 of the first portion A1, as in the first embodiment. Thus, the reverse magnetic flux reaching the permanent magnet 20 can be reduced even when the magnetic saturation occurs in the bypass path including the first portion A1.

In other respects, the motor of the third embodiment is configured in a similar manner to the motor 100 of the first embodiment.

In the third embodiment, the outer end edge 12a of the opening 12 has the concave portion 125 protruding toward the pole center P side, so that the opening width of the magnetic pole can be set to an appropriate width. Thus, noise of the motor can be reduced in addition to the effects of the first embodiment.

Since the width W3 of the third portion A3 is wider than the width W2 of the second portion A2, the thin-walled portion between the third portion A3 and the outer circumference 10a can be elongated. Therefore, the effect of suppressing leakage magnetic flux between adjacent magnetic poles can be enhanced.

### Fourth Embodiment

FIG. 13(A) is a diagram illustrating a rotor 1C of a fourth embodiment. The rotor 1C of the fourth embodiment has V-shaped magnet insertion holes 17, instead of the linear magnet insertion holes 11 of the rotor 1 of the first embodiment.

The rotor core 10 of the rotor 1C is provided with the V-shaped magnet insertion holes 17. Each magnet insertion hole 17 has its center in the circumferential direction which is convex toward the inner circumference 10b side. Two permanent magnets 20 are disposed in each magnet insertion hole 17. Each magnet insertion hole 17 constitutes one magnetic pole. The center of the magnet insertion hole 17 in the circumferential direction corresponds to the pole center P.

Each permanent magnet 20 has the magnetic pole surface 20a on the outer side in the radial direction and the magnetic pole surface 20b on the inner side in the radial direction. The reference line L1 is defined by an extension line of the magnetic pole surface 20a in a plane perpendicular to the axis C1.

The magnet insertion hole 17 has an outer end edge 17a located on the outer side in the radial direction and an inner end edge 17b located on the inner side in the radial direction. The outer end edge 17a is also referred to as an insertion hole outer end edge. The inner end edge 17b is also referred to as an insertion hole inner end edge. The outer end edge 17a extends in a V-shape such that its center in the circumferential direction is convex toward the inner circumference 10b side.

The inner end edge 17b of the magnet insertion hole 17 extends in a V-shape such that its center in the circumferential direction is convex toward the inner circumference 10b side, as is the case with the outer end edge 17a. A protrusion 17c is formed at the center of the inner end edge 17b in the circumferential direction. The protrusion 17c is located between two permanent magnets 20. The opening 12 is formed at each side of the magnet insertion hole 17 in the circumferential direction.

FIG. 13(B) is an enlarged diagram illustrating a part of the rotor 1C of the fourth embodiment. As described in the first embodiment, the opening 12 has the outer end edge 12a, the inner end edge 12b, and the circumferential end edge 12c. The outer end edge 12a has the end edge portions 121 and 122, and the inner end edge 12b has the end edge portions 123 and 124.

The protrusion 14 for positioning the permanent magnet 20 is formed on the end edge portion 123 of the inner end edge 12b. Each permanent magnet 20 is positioned in the circumferential direction by being sandwiched between the protrusion 17c and the protrusion 14.

As described in the first embodiment, the convex portion 13 protruding toward the end edge portion 122 of the outer end edge 12a is formed on the end edge portion 124 of the inner end edge 12b. At least a part of the tip end 13a of the convex portion 13 is located on the outer side in the radial direction with respect to the reference line L1.

An area between the end edge portion 122 of the outer end edge 12a and the tip end 13a of the convex portion 13 is defined as the first portion A1. The width of the first portion A1, i.e., the shortest distance between the outer end edge 12a of the opening 12 and the tip end 13a of the convex portion 13 is the width W1. An area between the end edge portion 121 of the outer end edge 12a and the tip end 14a of the protrusion 14 is defined as the second portion A2. The width of the second portion A2 is the width W2 (> W1).

That is, the opening 12 has the first portion A1 having the width W1 and the second portion A2 having the width W2 wider than the width W1, and the second portion A2 is located on the permanent magnet 20 side with respect to the first portion A1. At least a part of the first portion A1 is located on the outer side in the radial direction with respect to the reference line L1.

Thus, the reverse magnetic flux from the stator 5 flows in a direction away from the permanent magnet 20 through the bypass path running through the first portion A1. Consequently, the reverse magnetic flux reaching the permanent magnet 20 can be reduced, and thus the demagnetization of the permanent magnet 20 can be suppressed.

The third portion A3 having the width W3 wider than the width W1 is provided on the outer side in the radial direction with respect to the first portion A1 of the opening 12. Thus, the length in the circumferential direction of the thin-walled portion between the opening 12 and the outer circumference 10a can be increased, and thus the magnetic flux leakage between the adjacent magnetic poles can be suppressed.

The distance D1 from the end surface 20c of the permanent magnet 20 to the first portion A1 of the opening 12 is greater than or equal to the width W1 of the first portion A1, as in the first embodiment. Thus, the reverse magnetic flux reaching the permanent magnet 20 can be reduced even when the magnetic saturation occurs in the bypass path including the first portion A1.

In other respects, the motor of the fourth embodiment is configured in a similar manner to the motor 100 of the first embodiment.

In the fourth embodiment, in the rotor 1C in which two permanent magnets 20 are disposed in each V-shaped magnet insertion hole 17, the first portion A1 having the narrower width W1 is formed by the outer end edge 12a of the opening 12 and the convex portion 13, and the second portion A2 having the wider width W2 is formed on the permanent magnet 20 side with respect to the first portion A1. Thus, the bypass path running through the first portion A1 is formed. Since at least a part of the first portion A1 is located on the outer side in the radial direction with respect to the reference line L1, the reverse magnetic flux flowing through the bypass path is less likely to be directed toward the permanent magnet 20. Consequently, the reverse magnetic flux reaching the permanent magnet 20 can be reduced, and thus the demagnetization of the permanent magnet 20 can be suppressed, as in the first embodiment.

### Fifth Embodiment

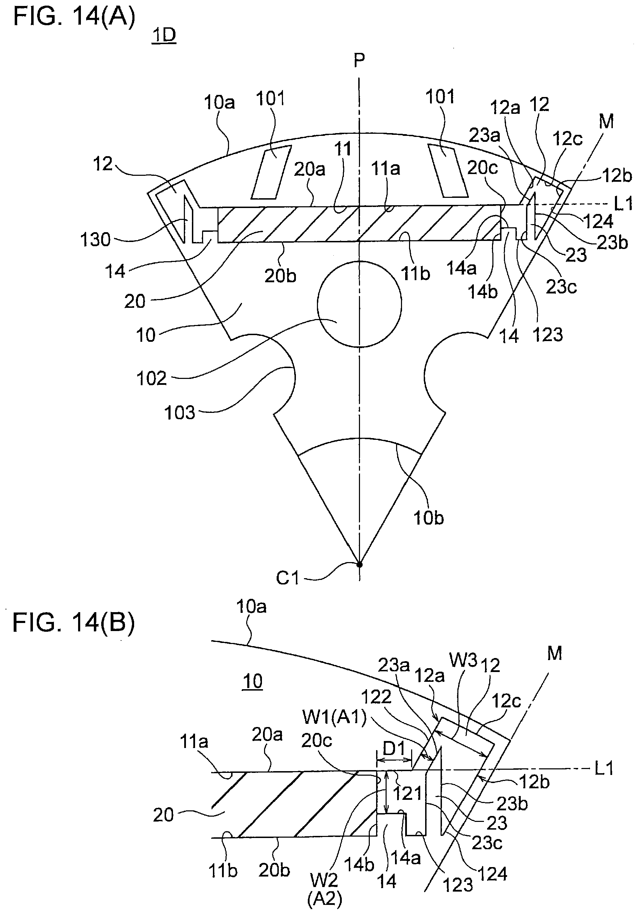

FIG. 14(A) is a diagram illustrating a rotor 1D of a fifth embodiment. The rotor 1D of the fifth embodiment has a convex portion 23 protruding from the end edge portion 123 of the inner end edge 12b of the opening 12, instead of the convex portion 13 of the first embodiment.

FIG. 14(B) is an enlarged diagram illustrating a part of the rotor 1D of the fifth embodiment. As described in the first embodiment, the opening 12 has the outer end edge 12a, the inner end edge 12b, and the circumferential end edge 12c. The outer end edge 12a has the end edge portions 121 and 122, and the inner end edge 12b has the end edge portions 123 and 124. The protrusion 14 for positioning the permanent magnet 20 is formed on the end edge portion 123 of the inner end edge 12b.

The convex portion 23 protrudes from the end edge portion 123 of the inner end edge 12b toward the outer end edge 12a of the opening 12. The convex portion 23 has a tip end 23a facing the outer end edge 12a of the opening 12, a side end 23b facing the outer circumference 10a, and a side end 23c facing the permanent magnet 20.

At least a part of the tip end 23a is located on the outer side in the radial direction with respect to the reference line L1 which is the extension line of the magnetic pole surface 20a of the permanent magnet 20. In this example, the side ends 23b and 23c of the convex portion 23 extend in parallel to the end surface 20c of the permanent magnet 20. The side end 23b on the outer circumference 10a side is longer than the side end 23c at the permanent magnet 20 side.

An area between the end edge portion 122 of the outer end edge 12a and the tip end 23a of the convex portion 23 is defined as the first portion A1. The width of the first portion A1, i.e., the shortest distance between the outer end edge 12a of the opening 12 and the tip end 23a of the convex portion 23 is the width W1. An area between the end edge portion 121 of the outer end edge 12a and the tip end 14a of the protrusion 14 is defined as the second portion A2. The width of the second portion A2 is the width W2 (> W1).

That is, the opening 12 has the first portion A1 having the width W1 and the second portion A2 having the width W2 wider than the width W1, and the second portion A2 is located on the permanent magnet 20 side with respect to the first portion A1. At least a part of the first portion A1 is located on the outer side in the radial direction with respect to the reference line L1.

Thus, the reverse magnetic flux from the stator 5 flows in a direction away from the permanent magnet 20 through the bypass path running through the first portion A1. Consequently, the reverse magnetic flux reaching the permanent magnet 20 can be reduced, and thus the demagnetization of the permanent magnet 20 can be suppressed.

The third portion A3 having the width W3 wider than the width W1 is provided on the outer circumference 10a side with respect to the first portion A1. The width W3 is the shortest distance between the outer end edge 12a and the inner end edge 12b, in the area located on the outer circumference 10a side with respect to the first portion A1. Thus, the length in the circumferential direction of the thin-walled portion between the opening 12 and the outer circumference 10a can be increased, and thus the magnetic flux leakage between the adjacent magnetic poles can be suppressed.

The distance D1 from the end surface 20c of the permanent magnet 20 to the first portion A1 of the opening 12 is greater than or equal to the width W1 of the first portion A1, as in the first embodiment. Thus, the reverse magnetic flux reaching the permanent magnet 20 can be reduced even when the magnetic saturation occurs in the bypass path including the first portion A1.

In other respects, the motor of the fifth embodiment is configured in a similar manner to the motor 100 of the first embodiment.

In the fifth embodiment, the first portion A1 having the narrower width W1 is formed by the outer end edge 12a of the opening 12 and the convex portion 23, and the second portion A2 having the wider width W2 is formed on the permanent magnet 20 side with respect to the first portion A1. Thus, the bypass path running through the first portion A1 is formed. Since at least a part of the first portion A1 is located on the outer side in the radial direction with respect to the reference line L1, the reverse magnetic flux flowing through the bypass path is less likely to be directed toward the permanent magnet 20. Consequently, the reverse magnetic flux reaching the permanent magnet 20 can be reduced, and thus the demagnetization of the permanent magnet 20 can be suppressed, as in the first embodiment.

### Sixth Embodiment

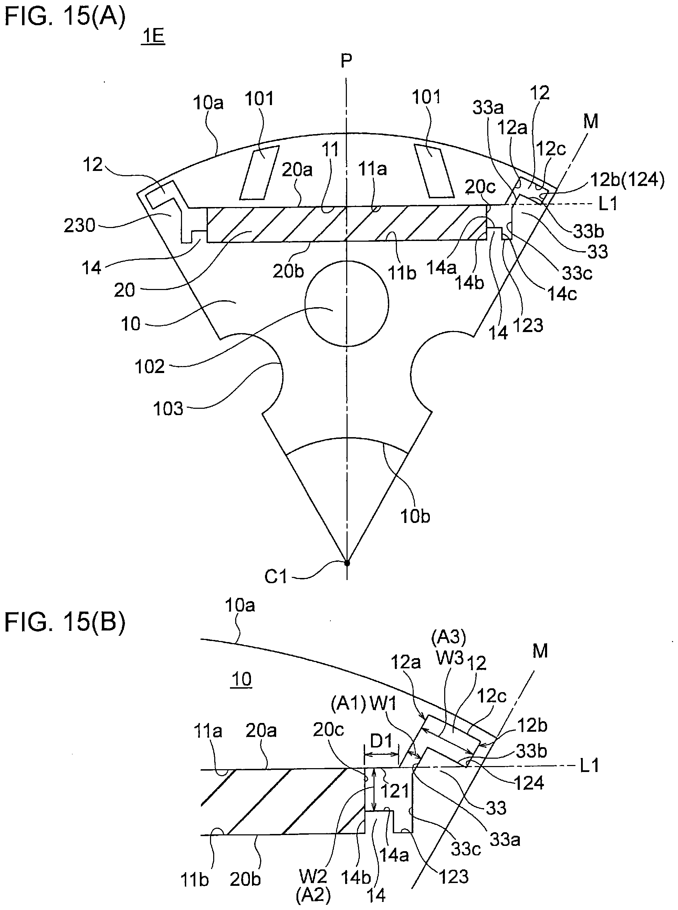

FIG. 15(A) is a diagram illustrating a rotor 1E of a sixth embodiment. The rotor 1E of the sixth embodiment has a convex portion 33 protruding from the end edge portions 123 and 124 of the inner end edge 12b of the opening 12, instead of the convex portion 23 of the fifth embodiment.

FIG. 15(B) is an enlarged diagram illustrating a part of the rotor 1E of the sixth embodiment. As described in the first embodiment, the opening 12 has the outer end edge 12a, the inner end edge 12b, and the circumferential end edge 12c. The outer end edge 12a has the end edge portions 121 and 122, and the inner end edge 12b has the end edge portions 123 and 124. The protrusion 14 for positioning the permanent magnet 20 is formed on the end edge portion 123 of the inner end edge 12b.

The convex portion 33 of the rotor 1E protrudes from the end edge portions 123 and 124 of the inner end edge 12b of the opening 12 toward the end edge portion 122 of the outer end edge 12a. The convex portion 33 has a tip end 33a facing the outer end edge 12a, a side end 33b facing the circumferential end edge 12c, and a side end 33c facing the end surface 20c of the permanent magnet 20.

At least a part of the tip end 33a is located on the outer side in the radial direction with respect to the above-described reference line L1. In this example, the side end 33b of the convex portion 33 extends in parallel to the circumferential end edge 12c, and the side end 33c extends in parallel to the end surface 20c of the permanent magnet 20. The area of the convex portion 33 in a plane perpendicular to the axis C1 is larger than the area of the convex portion 23 (FIG. 14(B)) of the fifth embodiment.

An area between the end edge portion 122 of the outer end edge 12a and the tip end 33a of the convex portion 33 is defined as the first portion A1. The width of the first portion A1, i.e., the shortest distance between the outer end edge 12a of the opening 12 and the tip end 33a of the convex portion 33 is the width W1. An area between the end edge portion 121 of the outer end edge 12a and the tip end 14a of the protrusion 14 is defined as the second portion A2. The width of the second portion A2 is the width W2 (> W1) .

That is, the opening 12 has the first portion A1 having the width W1 and the second portion A2 having the width W2 wider than the width W1, and the second portion A2 is located on the permanent magnet 20 side with respect to the first portion A1. At least a part of the first portion A1 is located on the outer side in the radial direction with respect to the reference line L1.

Thus, the reverse magnetic flux from the stator 5 flows in a direction away from the permanent magnet 20 through the bypass path running through the first portion A1. Consequently, the reverse magnetic flux reaching the permanent magnet 20 can be reduced, and thus the demagnetization of the permanent magnet 20 can be suppressed.

The third portion A3 having the width W3 wider than the width W1 is provided on the outer circumference 10a side with respect to the first portion A1. The width W3 is the shortest distance between the outer end edge 12a and the inner end edge 12b, in the area located on the outer circumference 10a side with respect to the first portion A1. Thus, the length in the circumferential direction of the thin-walled portion between the opening 12 and the outer circumference 10a can be increased, and thus the magnetic flux leakage between the adjacent magnetic poles can be suppressed.

The distance D1 from the end surface 20c of the permanent magnet 20 to the first portion A1 of the opening 12 is greater than or equal to the width W1 of the first portion A1. Thus, the reverse magnetic flux reaching the permanent magnet 20 can be reduced even when the magnetic saturation occurs in the bypass path including the first portion A1.

In other respects, the motor of the sixth embodiment is configured in a similar manner to the motor 100 of the first embodiment.

In the sixth embodiment, the first portion A1 having the narrower width W1 is formed by the outer end edge 12a of the opening 12 and the convex portion 33, and the second portion A2 having the wider width W2 is formed on the permanent magnet 20 side with respect to the first portion A1. Thus, the bypass path running through the first portion A1 is formed. Since at least a part of the first portion A1 is located on the outer side in the radial direction with respect to the reference line L1, the reverse magnetic flux flowing through the bypass path is less likely to be directed toward the permanent magnet 20. Consequently, the reverse magnetic flux reaching the permanent magnet 20 can be reduced, and thus the demagnetization of the permanent magnet 20 can be suppressed, as in the first embodiment.

### Seventh Embodiment

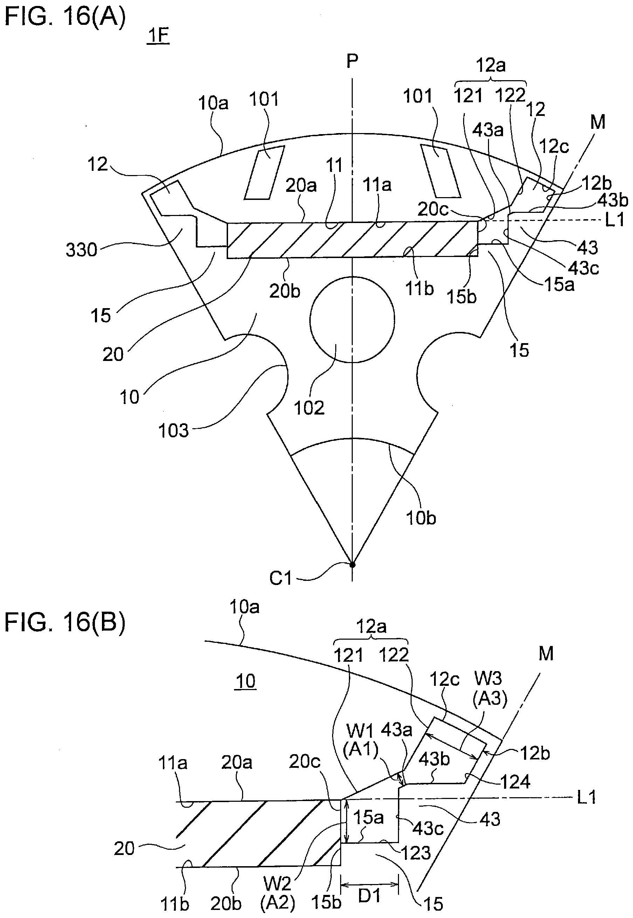

FIG. 16(A) is a diagram illustrating a rotor 1F of a seventh embodiment. The rotor 1F of the seventh embodiment has a convex portion 43 protruding from the end edge portions 123 and 124 of the inner end edge 12b of the opening 12, instead of the convex portion 33 of the sixth embodiment.

FIG. 16(B) is an enlarged diagram illustrating a part of the rotor 1F of the seventh embodiment. As described in the first embodiment, the opening 12 has the outer end edge 12a, the inner end edge 12b, and the circumferential end edge 12c. The outer end edge 12a has the end edge portions 121 and 122, and the inner end edge 12b has the end edge portions 123 and 124.

In the seventh embodiment, the end edge portion 121 of the outer end edge 12a extends from an end of the outer end edge 11a of the magnet insertion hole 11 so as to be inclined outward in the radial direction with respect to the outer end edge 11a. The end edge portion 122 of the outer end edge 12a extends from a terminal end of the end edge portion 121 so as to be inclined with respect to the end edge portion 121.

The convex portion 43 protruding toward the end edge portion 122 of the outer end edge 12a is formed on the end edge portions 123 and 124 of the inner end edge 12b. The convex portion 43 has a tip end 43a facing the outer end edge 12a, a side end 43b facing the circumferential end edge 12c of the opening 12, and a side end 43c facing the end surface 20c of the permanent magnet 20.

The entire tip end 43a of the convex portion 43 is located on the outer side in the radial direction with respect to the reference line L1 which is the extension line of the magnetic pole surface 20a of the permanent magnet 20. In this example, the side end 43b extends in parallel to the end edges 11a and 11b of the magnet insertion hole 11, and the side end 43c extends in parallel to the end surface 20c of the permanent magnet 20.

The protrusion 15 formed on the inner end edge 12b reaches the end edge portion 124 of the inner end edge 12b, as is the case with the protrusion 15 (FIG. 11(B)) of the second embodiment. However, instead of the protrusion 15, the protrusion 14 (FIG. 3) described in the first embodiment may be formed.

An area between the outer end edge 12a of the opening 12 and the tip end 43a of the convex portion 43 is defined as the first portion A1. The width of the first portion A1, i.e., the shortest distance between the outer end edge 12a of the opening 12 and the tip end 43a of the convex portion 43 is the width W1. An area between the end edge portion 121 of the outer end edge 12a and the tip end 15a of the protrusion 15 is defined as the second portion A2. The width of the second portion A2 is the width W2 (> W1).

That is, the opening 12 has the first portion A1 having the width W1 and the second portion A2 having the width W2 wider than the width W1, and the second portion A2 is located on the permanent magnet 20 side with respect to the first portion A1. The entire first portion A1 of the opening 12 is located on the outer side in the radial direction with respect to the reference line L1.

Thus, the reverse magnetic flux from the stator 5 flows in a direction away from the permanent magnet 20 through the bypass path running through the first portion A1. Consequently, the reverse magnetic flux reaching the permanent magnet 20 can be reduced, and thus the demagnetization of the permanent magnet 20 can be suppressed.

The third portion A3 having the width W3 wider than the width W1 is provided on the outer circumference 10a side with respect to the first portion A1. The width W3 is the shortest distance between the outer end edge 12a and the inner end edge 12b, in the area located on the outer circumference 10a side with respect to the first portion A1. Thus, the length in the circumferential direction of the thin-walled portion between the opening 12 and the outer circumference 10a can be increased, and thus the magnetic flux leakage between the adjacent magnetic poles can be suppressed.

The distance D1 from the end surface 20c of the permanent magnet 20 to the first portion A1 of the opening 12 is greater than or equal to the width W1 of the first portion A1. Thus, the reverse magnetic flux reaching the permanent magnet 20 can be reduced even when the magnetic saturation occurs in the bypass path including the first portion A1.

In other respects, the motor of the seventh embodiment is configured in a similar manner to the motor 100 of the first embodiment.

Incidentally, the end edge portion 121 of the outer end edge 12a is inclined with respect to the outer end edge 11a of the magnet insertion hole 11, but may be in parallel to the outer end edge 11a of the magnet insertion hole 11, as in the end edge portion 121 of the first embodiment.

In the seventh embodiment, the first portion A1 having the narrower width W1 is formed by the outer end edge 12a of the opening 12 and the convex portion 43, and the second portion A2 having the wider width W2 is formed on the permanent magnet 20 side with respect to the first portion A1. Thus, the bypass path running through the first portion A1 is formed. Since the entire first portion A1 is located on the outer side in the radial direction with respect to the reference line L1, the reverse magnetic flux flowing through the bypass path is much less likely to reach the permanent magnet 20, and thus the effect of suppressing the demagnetization of the permanent magnet 20 can be enhanced.

### Eighth Embodiment

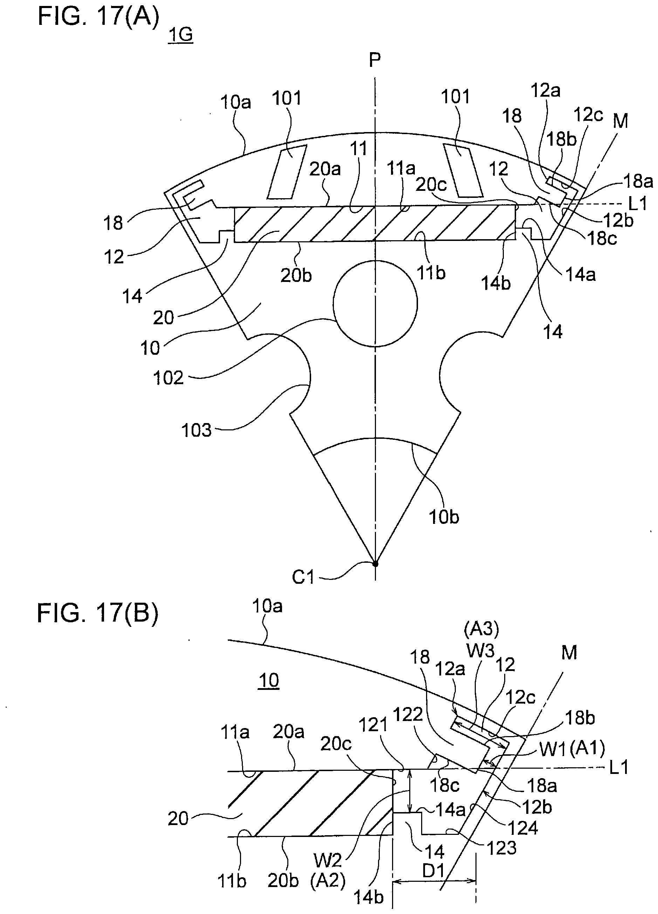

FIG. 17(A) is a diagram illustrating a rotor 1G of an eighth embodiment. In the rotor 1G of the eighth embodiment, the convex portion 13 is not formed on the inner end edge 12b of the opening 12, but a convex portion 18 is formed on the outer end edge 12a.

FIG. 17(B) is an enlarged diagram illustrating a part of the rotor 1G of the eighth embodiment. As described in the first embodiment, the opening 12 has the outer end edge 12a, the inner end edge 12b, and the circumferential end edge 12c. The outer end edge 12a has the end edge portions 121 and 122, and the inner end edge 12b has the end edge portions 123 and 124.

The convex portion 18 of the eighth embodiment extends from the end edge portion 122 of the outer end edge 12a toward the end edge portion 124 of the inner end edge 12b. The convex portion 18 has a tip end 18a facing the inner end edge 12b, a side end 18b facing the circumferential end edge 12c, and a side end 18c facing the end surface 20c of the permanent magnet 20. At least a part of the tip end 18a is located on the outer side in the radial direction with respect to the above-described reference line L1.

An area between the inner end edge 12b of the opening 12 and the tip end 18a of the convex portion 18 is defined as the first portion A1. The width of the first portion A1, i.e., the shortest distance between the inner end edge 12b of the opening 12 and the tip end 18a of the convex portion 18 is the width W1. An area between the end edge portion 121 of the outer end edge 12a and the tip end 14a of the protrusion 14 is defined as the second portion A2. The width of the second portion A2 is the width W2 (> W1).

That is, the opening 12 also has the first portion A1 having the width W1 and the second portion A2 having the width W2 wider than the width W1, and the second portion A2 is located on the permanent magnet 20 side with respect to the first portion A1. The entire first portion A1 of the opening 12 is located on the outer side in the radial direction with respect to the reference line L1.

Thus, the reverse magnetic flux from the stator 5 flows in a direction away from the permanent magnet 20 through the bypass path running through the first portion A1. Consequently, the reverse magnetic flux reaching the permanent magnet 20 can be reduced, and thus the demagnetization of the permanent magnet 20 can be suppressed.

The third portion A3 having the width W3 wider than the width W1 is provided on the outer circumference 10a side with respect to the first portion A1. The width W3 is the shortest distance between the outer end edge 12a and the inner end edge 12b, in the area located on the outer circumference 10a side with respect to the first portion A1. Thus, the length in the circumferential direction of the thin-walled portion between the opening 12 and the outer circumference 10a can be increased, and thus the magnetic flux leakage between the adjacent magnetic poles can be suppressed.

The distance D1 from the end surface 20c of the permanent magnet 20 to the first portion A1 of the opening 12 is greater than or equal to the width W1 of the first portion A1. Thus, the reverse magnetic flux reaching the permanent magnet 20 can be reduced even when the magnetic saturation occurs in the bypass path including the first portion A1.

In other respects, the motor of the eighth embodiment is configured in a similar manner to the motor 100 of the first embodiment.

In the eighth embodiment, the first portion A1 having the narrower width W1 is formed by the convex portion 18 and the inner end edge 12b of the opening 12, and the second portion A2 having the wider width W2 is formed on the permanent magnet 20 side with respect to the first portion A1. Thus, the bypass path running through the first portion A1 is formed. Since at least a part of the first portion A1 is located on the outer side in the radial direction with respect to the reference line L1, the reverse magnetic flux flowing through the bypass path is less likely to be directed toward the permanent magnet 20. Consequently, the reverse magnetic flux reaching the permanent magnet 20 can be reduced, and thus the demagnetization of the permanent magnet 20 can be suppressed.

### Ninth Embodiment

FIG. 18(A) is a diagram illustrating a rotor 1H of a ninth embodiment. In the rotor 1H of the ninth embodiment, each of end edges 19a and 19b of a magnet insertion hole 19 has a curved shape.

The rotor core 10 of the rotor 1H is provided with magnet insertion holes 19 each of which is in an arc shape such that its center in the circumferential direction is convex toward the inner circumference. One permanent magnet 20 is disposed in each magnet insertion hole 19. Each magnet insertion hole 19 constitutes one magnetic pole. The center of the magnet insertion hole 19 in the circumferential direction corresponds to the pole center P.

The magnet insertion hole 19 has the outer end edge 19a on the outer side in the radial direction and the inner end edge 19b on the inner side in the radial direction. The outer end edge 19a is also referred to as an insertion hole outer end edge. The inner end edge 19b is also referred to as an insertion hole inner end edge. Each of the end edges 19a and 19b is formed in an arc shape such that its center in the circumferential direction is convex toward the inner circumference. Each of the magnetic pole surfaces 20a and 20b of the permanent magnet 20 is formed in an arc shape such that its center in the circumferential direction is convex toward the inner circumference, as is the case with those of the magnet insertion hole 19. The reference line L1 is defined by an arc, which is an extension line of the magnetic pole surface 20a in a plane perpendicular to the axis C1.

The opening 12 extends from an end of the magnet insertion hole 19 in the circumferential direction toward the outer circumference 10a of the rotor core 10. As described in the first embodiment, the opening 12 has the outer end edge 12a, the inner end edge 12b, and the circumferential end edge 12c.

FIG. 18(B) is an enlarged diagram illustrating a part of the rotor 1H of the ninth embodiment. The outer end edge 12a of the opening 12 has an end edge portion 121 located on an extension line (an arc) of the outer end edge 19a of the magnet insertion hole 19, and an end edge portion 122 extending from the terminal end of the end edge portion 121 toward the outer circumference 10a.

The inner end edge 12b of the opening 12 has an end edge portion 123 located on the extension line (an arc) of the outer end edge 19a of the magnet insertion hole 19, and an end edge portion 124 extending from the terminal end of the end edge portion 123 toward the outer circumference 10a. The protrusion 14 for positioning the permanent magnet 20 is provided on the end edge portion 123 of the inner end edge 12b.

A convex portion 13 protruding toward the end edge portion 122 of the outer end edge 12a is formed on the end edge portion 124 of the inner end edge 12b. At least a part of the tip end 13a of the convex portion 13 is located on the outer side in the radial direction with respect to the reference line L1.

An area between the outer end edge 12a of the opening 12 and the tip end 13a of the convex portion 13 is defined as the first portion A1. The width of the first portion A1, i.e., the shortest distance between the outer end edge 12a of the opening 12 and the tip end 13a of the convex portion 13 is the width W1. An area between the end edge portion 121 of the outer end edge 12a and the tip end 14a of the protrusion 14 is defined as the second portion A2. The width of the second portion A2 is the width W2 (> W1).

That is, the opening 12 has the first portion A1 having the width W1 and the second portion A2 having the width W2 wider than the width W1, and the second portion A2 is located on the permanent magnet 20 side with respect to the first portion A1. At least a part of the first portion A1 of the opening 12 is located on the outer side in the radial direction with respect to the arc-shaped reference line L1.

Thus, the reverse magnetic flux from the stator 5 flows in a direction away from the permanent magnet 20 through the bypass path that runs through the first portion A1. Consequently, the reverse magnetic flux reaching the permanent magnet 20 can be reduced, and thus the demagnetization of the permanent magnet 20 can be suppressed.

The third portion A3 having the width W3 wider than the width W1 is provided on the outer circumference 10a side with respect to the first portion A1. The width W3 is the shortest distance between the outer end edge 12a and the inner end edge 12b, in the area located on the outer circumference 10a side with respect to the first portion A1. Thus, the length in the circumferential direction of the thin-walled portion between the opening 12 and the outer circumference 10a can be increased, and thus the magnetic flux leakage between the adjacent magnetic poles can be suppressed.

The distance D1 from the end surface 20c of the permanent magnet 20 to the first portion A1 of the opening 12 is greater than or equal to the width W1 of the first portion A1, as in the first embodiment. Thus, the reverse magnetic flux reaching the permanent magnet 20 can be reduced even when the magnetic saturation occurs in the bypass path including the first portion A1.

In other respects, the motor of the ninth embodiment is configured in a similar manner to the motor 100 of the first embodiment.

In the ninth embodiment, in the rotor 1H in which the permanent magnets 20 are disposed in the curved magnet insertion holes 19, the first portion A1 having the narrower width W1 is formed between the outer end edge 12a of the opening 12 and the convex portion 13, and the second portion A2 having the wider width W2 is formed on the permanent magnet 20 side with respect to the first portion A1. Thus, the bypass path running through the first portion A1 is formed. Since at least a part of the first portion A1 is located on the outer side in the radial direction with respect to the reference line L1, the reverse magnetic flux flowing through the bypass path is less likely to be directed toward the permanent magnet 20. Consequently, the reverse magnetic flux reaching the permanent magnet 20 can be reduced, and thus the demagnetization of the permanent magnet 20 can be suppressed, as in the first embodiment.

The first to ninth embodiments described above can be combined as appropriate. For example, the magnet insertion hole 11 of any of the second, third, and fifth to eighth embodiments may be formed in a V-shape as in the magnet insertion hole 17 of the fourth embodiment, or in a curved shape as in the magnet insertion hole 19 of the ninth embodiment.

In the third to sixth, eighth and ninth embodiments, the protrusion 15 of the second embodiment may be provided in place of the protrusion 14. The concave portion 125 of the third embodiment may be provided in the opening 12 of any of the second and fourth to ninth embodiments. The combinations are not limited thereto, but other combinations of the first to ninth embodiments can be made.

### (Compressor)

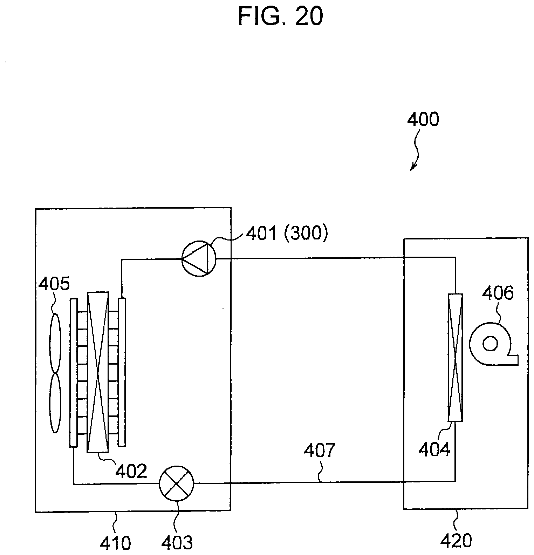

Next, the compressor 300 to which the motors of the first to ninth embodiments are applicable will be described. FIG. 19 is a longitudinal-sectional view of the compressor 300 to which the motors of the first to ninth embodiments are applicable. The compressor 300 is a rotary compressor, and is used, for example, in the air conditioner 400 (FIG. 20).

The compressor 300 includes a compression mechanism part 310, the motor 100 that drives the compression mechanism part 310, the shaft 25 that connects the compression mechanism part 310 and the motor 100, and a closed container 301 that houses these components.

The closed container 301 is a container made of a steel sheet and has a cylindrical shell and a container top that covers the top of the shell. The stator 5 of the motor 100 is assembled inside the shell of the closed container 301 by shrink-fitting, press-fitting, welding, or the like.

The container top of the closed container 301 is provided with a discharge pipe 307 for discharging the refrigerant to the outside and terminals 305 for supplying electric power to the motor 100. An accumulator 302 that stores a refrigerant gas is fixed to the outside of the closed container 301. At the bottom of the closed container 301, refrigerant oil is retained for lubricating bearings of the compression mechanism part 310.

The compression mechanism part 310 has a cylinder 311 with a cylinder chamber 312, a rolling piston 314 fixed to the shaft 25, a vane dividing the inside of the cylinder chamber 312 into a suction side and a compression side, and an upper frame 316 and a lower frame 317 which close both ends of the cylinder chamber 312 in the axial direction.

Both the upper frame 316 and the lower frame 317 have bearings that rotatably support the shaft 25. An upper discharge muffler 318 and a lower discharge muffler 319 are fixed to the upper frame 316 and the lower frame 317, respectively.

The cylinder 311 is provided with the cylinder chamber 312 having a cylindrical shape about the axis C1. An eccentric shaft portion 25a of the shaft 25 is located inside the cylinder chamber 312. The eccentric shaft portion 25a has the center that is eccentric with respect to the axis C1. The rolling piston 314 is fitted to the outer circumference of the eccentric shaft portion 25a. When the motor 100 rotates, the eccentric shaft portion 25a and the rolling piston 314 rotate eccentrically within the cylinder chamber 312.

A suction port 313 through which the refrigerant gas is sucked into the cylinder chamber 312 is formed in the cylinder 311. A suction pipe 303 that communicates with the suction port 313. is fixed to the closed container 301, whereby the refrigerant gas is supplied from the accumulator 302 to the cylinder chamber 312 via the suction pipe 303.

The compressor 300 is supplied with a mixture of a low-pressure refrigerant gas and a liquid refrigerant from a refrigerant circuit of the air conditioner 400 (FIG. 20). If the liquid refrigerant flows into and is compressed by the compression mechanism part 310, it may cause the failure of the compression mechanism part 310. Thus, the accumulator 302 separates the refrigerant into the liquid refrigerant and the refrigerant gas and supplies only the refrigerant gas to the compression mechanism part 310.

For example, R410A, R407C, or R22 may be used as the refrigerant, but it is desirable to use a refrigerant with a low global warming potential (GWP) from the viewpoint of preventing global warming. Examples of the low GWP refrigerant include the following refrigerants.
(1) First, a halogenated hydrocarbon having a carbon-carbon double bond in its composition, for example, HFO (Hydro-Fluoro-Olefin)-1234yf (CF₃CF=CH₂), can be used. The GWP of HFO-1234yf is 4.
(2) Alternatively, a hydrocarbon having a carbon-carbon double bond in its composition, for example, R1270 (propylene), may be used. The GWP of R1270 is 3, which is lower than that of HFO-1234yf, but R1270 has higher flammability than HFO-1234yf.
(3) A mixture containing at least one of a halogenated hydrocarbon having a carbon-carbon double bond in its composition and a hydrocarbon having a carbon-carbon double bond in its composition may be used. For example, a mixture of HFO-1234yf and R32 may be used. HFO-1234yf described above is a low-pressure refrigerant and thus tends to increase a pressure drop, which may lead to reduction in the performance of a refrigeration cycle (particularly, an evaporator). For this reason, a mixture of the HFO-1234yf with R32 or R41, which is a high-pressure refrigerant as compared with HFO-1234yf, is desirably used in practice.

The operation of the compressor 300 is as follows. The refrigerant gas supplied from the accumulator 302 is supplied through the suction pipe 303 into the cylinder chamber 312 of the cylinder 311. When the motor 100 is driven to rotate the rotor 1, the shaft 25 rotates with the rotor 1. Then, the rolling piston 314 fitted to the shaft 25 eccentrically rotates inside the cylinder chamber 312, and compresses the refrigerant in the cylinder chamber 312. The compressed refrigerant passes through the discharge mufflers 318 and 319, rises inside the closed container 301 through the holes 102 and 103 and the like provided in the motor 100, and is then discharged through the discharge pipe 307.

The motor 100 described in each embodiment has a high motor efficiency because the demagnetization of the permanent magnet 20 is suppressed. Thus, by using the motor 100 described in any of the embodiments as a power source of the compressor 300, the operating efficiency of the compressor 300 can be improved.

### (Air Conditioner)

Next, the air conditioner 400 as a refrigeration cycle apparatus including the compressor 300 illustrated in FIG. 19 will be described. FIG. 19 is a diagram illustrating the configuration of the air conditioner 400. The air conditioner 400 includes a compressor 401, a condenser 402, a throttle device (a decompression device) 403, and an evaporator 404.

The compressor 401, the condenser 402, the throttle device 403, and the evaporator 404 are coupled together by a refrigerant pipe 407 to configure the refrigeration cycle. That is, the refrigerant circulates through the compressor 401, the condenser 402, the throttle device 403, and the evaporator 404 in this order.

The compressor 401, the condenser 402, and the throttle device 403 are provided in an outdoor unit 410. The compressor 401 is composed of the compressor 300 illustrated in FIG. 19. The outdoor unit 410 is provided with an outdoor fan 405 that supplies outdoor air to the condenser 402. The evaporator 404 is provided in an indoor unit 420. The indoor unit 420 is provided with an indoor fan 406 that supplies indoor air to the evaporator 404.

The operation of the air conditioner 400 is as follows. The compressor 401 compresses the sucked refrigerant and sends out the compressed refrigerant. The condenser 402 exchanges heat between the refrigerant flowing in from the compressor 401 and outdoor air to condense and liquefy the refrigerant and sends out the liquefied refrigerant to the refrigerant pipe 407. The outdoor fan 405 supplies outdoor air to the condenser 402. The throttle device 403 adjusts the pressure or the like of the refrigerant flowing through the refrigerant pipe 407 by changing the opening degree of the throttle device 403.

The evaporator 404 exchanges heat between the refrigerant brought into a low-pressure state by the throttle device 403 and indoor air to cause the refrigerant to remove heat from the air, thereby evaporating (vaporizing) the refrigerant, and then sends out the evaporated refrigerant to the refrigerant pipe 407. The indoor fan 406 supplies indoor air to the evaporator 404. Thus, cooled air from which the heat is removed in the evaporator 404 is supplied to the interior of a room.

The air conditioner 400 has the compressor 401 whose operating efficiency is improved by applying the motor 100 described in each embodiment. Thus, the operating efficiency of the air conditioner 400 can be improved.

Although the desirable embodiments have been specifically described above, various modifications and changes can be made to the above-described embodiments.

### DESCRIPTION OF REFERENCE CHARACTERS

1, 1A, 1B, 1C, 1D, 1E, 1F, 1G, 1H: rotor, 5: stator, 8: protrusion, 9: protrusion, 10: rotor core, 10a: outer circumference, 10b: inner circumference, 11: magnet insertion hole, 11a: outer end edge (insertion hole outer end edge), 11b: inner end edge (insertion hole inner end edge), 12: opening, 12a: outer end edge, 12b: inner end edge, 12c: circumferential end edge, 13: convex portion, 13a: tip end, 13b, 13b: side end, 14: protrusion, 14a: tip end, 14b, 14c: side end, 15: protrusion, 15a: tip end, 15b: side end, 17: magnet insertion hole, 17a: outer end edge, 17b: inner end edge, 17c: protrusion, 20: permanent magnet, 20a: magnetic pole surface, 20b: magnetic pole surface, 20c: end surface, 23: convex portion, 23a: tip end, 23b, 23c: side end, 33: convex portion, 33a: tip end, 33b, 33c: side end, 43: convex portion, 43a: tip end, 43b, 43c: side end, 50: stator core, 55: coil, 100: motor, 121, 123: end edge portion (first end edge portion), 122, 124: end edge portion (second end edge portion), 125: concave portion, 300: compressor, 301: closed container, 310: compression mechanism part, 330: convex portion, 331: tip end, 43b, 333: side end, 400: air conditioner, 401: compressor, 402: condenser, 403: throttle device, 404: evaporator, 407: refrigerant pipe, A1: first portion, A2: second portion, L1: reference line.

## Claims

1. A rotor comprising:
a rotor core having an outer circumference extending in a circumferential direction about an axis, a magnet insertion hole located on an inner side of the outer circumference in a radial direction about the axis, and an opening connected to an end of the magnet insertion hole in the circumferential direction; and
a permanent magnet disposed in the magnet insertion hole and having a magnetic pole surface on an outer side in the radial direction,
wherein the magnet insertion hole has an insertion hole outer end edge located on an outer side in the radial direction and an insertion hole inner end edge located on an inner side in the radial direction,
wherein the opening has an outer end edge extending from an end of the insertion hole outer end edge in the circumferential direction toward the outer circumference, and an inner end edge facing the outer end edge,
wherein the opening has a first portion where the outer end edge and the inner end edge face each other across a width W1, and a second portion where the outer end edge and the inner end edge face each other across a width W2 wider than the width W1,
wherein the second portion is located between the first portion and the permanent magnet, and
wherein at least a part of the first portion is located on an outer side in the radial direction with respect to a reference line obtained by extending the magnetic pole surface in a plane perpendicular to the axis.

2. The rotor according to claim 1, wherein the opening has a third portion which is located on an outer side in the radial direction with respect to the first portion and where the outer end edge and the inner end edge face each other across a width W3 wider than the width W1.

3. The rotor according to claim 2, wherein a concave portion is formed on the outer end edge in the third portion to extend in a direction away from the inner end edge, and
wherein the width W3 of the third portion is wider than the width W2 of the second portion.

4. The rotor according to any one of claims 1 to 3, wherein a protrusion for positioning the permanent magnet is formed in the opening, and
wherein the outer end edge of the opening and the protrusion face each other across the width W2.

5. The rotor according to claim 4, wherein the protrusion extends to reach the inner end edge.

6. The rotor according to any one of claims 1 to 5, wherein the width W1 of the first portion is narrower than a thickness T of the permanent magnet in the radial direction.

7. The rotor according to claim 6, wherein the width W1 of the first portion and the thickness T of the permanent magnet satisfy 0.2 ≤ W1/T ≤ 0.5.

8. The rotor according to any one of claims 1 to 7, wherein a distance from an end of the permanent magnet in the circumferential direction to the first portion is greater than or equal to the width W1.

9. The rotor according to any one of claims 1 to 8, wherein a convex portion protruding toward the outer end edge is formed on the inner end edge of the opening, and
wherein the first portion is formed between the outer end edge and the convex portion.

10. The rotor according to any one of claims 1 to 8, wherein a convex portion protruding toward the inner end edge is formed on the outer end edge of the opening, and
wherein the first portion is formed between the inner end edge of the opening and the convex portion.

11. The rotor according to any one of claims 1 to 8, wherein the inner end edge of the opening has a first end edge portion located on an extension line of the insertion hole inner end edge, and a second end edge portion extending toward the outer circumference so as to be inclined with respect to the first end edge portion, and
wherein a convex portion protruding toward the outer end edge of the opening is formed on the first end edge portion of the inner end edge.

12. The rotor according to any one of claims 1 to 8, wherein the inner end edge of the opening has a first end edge portion located on an extension line of the insertion hole inner end edge, and a second end edge portion extending toward the outer circumference so as to be inclined with respect to the first end edge portion, and
wherein a convex portion protruding toward the outer end edge of the opening is formed on the first end edge portion and the second end edge portion of the inner end edge.

13. The rotor according to any one of claims 1 to 12, wherein the entire first portion is located on the outer side in the radial direction with respect to the reference line.

14. The rotor according to any one of claims 1 to 13, wherein the magnetic pole surface of the magnet insertion hole has a V-shape that is convex toward an inner side in the radial direction in a plane perpendicular to a direction of the axis.

15. The rotor according to any one of claims 1 to 14, wherein the magnetic pole surface of the magnet insertion hole has a curved shape in a plane perpendicular to a direction of the axis.

16. A motor comprising:
the rotor according to any one of claims 1 to 15; and
a stator surrounding the rotor from outside in the radial direction.

17. A compressor comprising:
the motor according to claim 16; and
a compression mechanism part to be driven by the motor.

18. An air conditioner comprising:
the compressor according to claim 17;
a condenser to condense refrigerant sent out from the compressor;
a decompression device to decompress the refrigerant condensed by the condenser; and
an evaporator to evaporate the refrigerant decompressed by the decompression device.
